(19) Europäisches Patentamt

**European Patent Office**

**Office européen des brevets**

(11) Veröffentlichungsnummer: **0 193 852 B1**

(12) **EUROPÄISCHE PATENTSCHRIFT**

(45) Veröffentlichungstag der Patentschrift: **13.01.93**

(21) Anmeldenummer: **86102458.6**

(22) Anmeldetag: **25.02.86**

(51) Int. Cl.⁵: **G02B 6/12**

(54) Integrierte Resonatormatrix zum wellenlängenselektiven Trennen bzw. Zusammenfügen von Kanälen im Frequenzbereich der optischen Nachrichtentechnik.

(30) Priorität: **25.02.85 DE 3506569**

(43) Veröffentlichungstag der Anmeldung:
**10.09.86 Patentblatt 86/37**

(45) Bekanntmachung des Hinweises auf die Patenterteilung:
**13.01.93 Patentblatt 93/02**

(84) Benannte Vertragsstaaten:
**AT BE CH DE FR GB IT LI LU NL SE**

(56) Entgegenhaltungen:
**EP-A- 0 118 577      DE-A- 3 227 682**
**DE-A- 3 329 719      GB-A- 2 105 863**
**US-A- 3 589 794      US-A- 4 198 115**

**IBM TECHNICAL DISCLOSURE BULLETIN, Band 13, Nr. 8, Januar 1971, Seiten 2413-2415; M.L. DAKSS et al.: "Detecting multiplexed picosecond pulses"**

**PATENTS ABSTRACTS OF JAPAN, Band 6, Nr. 59 (P-110) [937], 16. April 1982; & JP - A - 57 604**

(73) Patentinhaber: **Börner, Manfred, Prof. Dr.**
**Rehweg 24**
**W-7000 Ulm(DE)**

Patentinhaber: **Müller, Reinhard, Dipl.-Ing.**
**Grimminger Strasse 2**
**W-8070 Ingolstadt(DE)**

Patentinhaber: **Trommer, Gert, Dr.**
**Conolly Strasse 16**
**W-8000 München 40(DE)**

(72) Erfinder: **Börner, Manfred, Prof. Dr.**
**Rehweg 24**
**W-7000 Ulm(DE)**
Erfinder: **Müller, Reinhard, Dipl.-Ing.**
**Grimminger Strasse 2**
**W-8070 Ingolstadt(DE)**
Erfinder: **Trommer, Gert, Dr.**
**Conolly Strasse 16**
**W-8000 München 40(DE)**

(74) Vertreter: **Fuchs, Franz-Josef, Dr.-Ing.**
**Postfach 22 13 17**
**W-8000 München 22(DE)**

## Beschreibung

Die Erfindung betrifft eine Anordnung von optischen Resonatoren zum wellenlängenselektiven Auftrennen mehrerer zusammengefaßter Kanäle und/oder Zusammenfassen mehrerer getrennter Kanäle verschiedener Welllenlänge nach dem Oberbegriff des Anspruchs 1.

Anordnungen der genannten Art sind aus der US-A-3 589 794 bekannt. Bei diesen Anordnungen können die Resonatoren sowohl Fabry-Perot-Resonatoren als auch Ringresonatoren sein und mehrere Resonatoren können genutzt werden.

Aufgabe der Erfindung ist es, eine für die gleichzeitige Übertragung vieler eng benachbarter Träger nach einem kohärent optischen Homodynoder Heterodyn-Verfahren zum Multiplexen und Demultiplexen geeignete monolithisch integrierbare Anordnung anzugeben.

Diese Aufgabe wird mit einer Anordnung der eingangs genannten Art gelöst, welche die im kennzeichnenden Teil des Anspruchs 1 angegebenen Merkmale aufweist.

Die Erfindung bezieht sich danach auf eine Resonatormatrix, deren einzelne Resonatoren aus an den Endflächen verspiegelten dielektrischen Wellenleitern bestehen und derart auf ein Substrat integriert sind, daß die Resonatoren innerhalb verschiedener Ebenen und zwischen verschiedenen Ebenen unterschiedlich stark optisch gekoppelt sind, und die die Aufgabe erfüllt, mehrere modulierte und unmodulierte Träger verschiedener Wellenlängen im Frequenzbereich der optischen Nachrichtentechnik wellenlängenselektiv zu trennen und/oder zusammenzufügen. Spezielle Ausführungsformen der Resonatormatrix erlauben es, die Kanäle in der Anordnung, in der sie getrennt und/oder zusammengefügt werden, auch zu modulieren, oder auch zu verstärken, oder auch zu demodulieren und/oder in elektrische Signale umzuwandeln. Auf das gleiche Halbleitersubstrat wie die Resonatormatrix können auch ergänzende elektronische Schaltkreise und/oder weitere optische Elemente integriert werden, z.B. auch weitere Resonatormatrizen.

Zunächst wird der Anwendungsbereich der Resonatormatrix dargestellt:
Durch den insbesondere mit der zu erwartenden Bildübertragungstechnik steigenden Bedarf an Übertragungsbandbreite in Kabelverbindungen ist es angezeigt, Vorrichtungen zu entwickeln, die auf einer einzigen Glasfaser sehr viel mehr als die heutige Bandbreite von etwa 1 GHz verfügbar machen. Wegen der Schwierigkeiten, in den Halbleiterschaltungen mehr als 1 GHz zu verarbeiten, wurden schon Vorschläge gemacht, mehr als eine Trägerfrequenz zu übertragen. Liegen nun die Träger sehr weit auseinander z.B. bei 0,85 $\mu$m, das

entspricht der Wellenlänge des Gallium-Aluminium-Arsenid-Lasers, und bei 1,3 $\mu$m, das entspricht der Wellenlänge des Indium- Phosphid-Lasers, so können beide Frequenzen nicht gleichzeitig von einem einzigen Laserverstärker im Zuge des Glasfaserkabels zwischenverstärkt werden.

Es ist deshalb schon vorgeschlagen worden, die Träger dicht nebeneinander zu plazieren, innerhalb der relativ kleinen Bandbreite eines einzigen Laserverstärkers. Dieser Laserverstärker, beispielsweise ein Halbleiterinjektionslaser aus Indium-Phosphid, kann dann trotz einer sehr kleinen relativen Bandbreite von etwa $10^{-3}$ immer noch Frequenzbänder von etwa $10^{14}$ Hz.$10^{-3}$ = 100 GHz gleichzeitig verstärken.

Auch für die Demodulation gibt es Vorschläge. Wegen des geringeren Leistungsbedarfes je Kanal bieten sich die aus der Hochfrequenztechnik bekannten Heterodyn-Verfahren oder Homodyn-Verfahren an, Verfahren also, die mit entsprechendem Trägerzusatz in einer Fotodiode arbeiten. Solch eine Fotodiode wäre vorteilhaft nach der Patentanmeldung DE-A-32 05 461.0 mit einem selektiven Resonator zu kombinieren.

Bei der im folgenden darzustellenden erfindungsgemäßen Realisation des Verfahrens der Modulation und Demodulation von vielen Lichtträgern in sehr engen Frequenzbändern ist noch folgender Umstand bemerkenswert:
Die Realisierung der genannten optischen Elemente verlangt aus Stabilitäts- und Kostengründen eine Komprimierung der "Lichtschaltung" auf engsten Raum. Auch die zugehörigen elektronischen Ansteuer- und Regelelemente sollten aus Kopplungsgründen in enger nachbarlicher Beziehung zur "Lichtschaltung" stehen. Somit scheint also eine auch in der Literatur schon vorgeschlagene enge, monolithische, elektro-optische Integration angezeigt.

Während nun aber bisher wenigstens unvollkommene Vorschläge existieren, den Empfänger auf Silizium als Basismaterial herzustellen, fehlen Vorstellungen für die Realisierung eines wellenlängenselektiven Modulators für viele dicht liegende Träger im Wellenlängenbereich der optischen Nachrichtentechnik samt Ansteuerschaltung praktisch völlig. Das wird wie folgt begründet: Man hat bisher die Modulation sehr erfolgreich mit Hilfe des Injektionsstromes in Halbleiterlasern realisiert. Das war gleichzeitig eine sehr wirkungsvolle Integration von Sender und Modulator. Ein optisches Nachrichtenübertragungssystem mit vielen, dicht liegenden Kanälen, das vorzugsweise mit Heterodyn- oder Homodyn-Verfahren arbeitet, stellt jedoch bezüglich der Frequenzstabilität und der Schmalbandigkeit der Laserlinien höhere Ansprüche als sie durch das bisher vorwiegend praktizierte Modulationsverfahren erfüllt werden können. Deshalb ist es angezeigt, das Konzept der Modulation nochmals zu überdenken.

Zwingend wird dieser Vorsatz durch folgendes Argument:
Aus der Hochfrequenztechnik ist bekannt, daß höchst frequenzstabile Oszillatoren tunlichst nicht direkt moduliert werden sollen. Die Modulation sollte besser in einem vom Oszillator getrennten Modulator durchgeführt werden. Dieser Umstand trifft bei Lichtfrequenzen noch mehr zu: Die Frequenzstabilität der kohärenten, monochromatischen Lichtquelle sollte möglichst deutlich weniger als ein MHz, besser wenige kHz betragen. Das entspricht also einer relativen Stabilität von etwa $10^{-8} \ldots 10^{-11}$ jeder zu modulierenden Frequenz. Wie schon vorgeschlagen /1/ sollte dann besser bei kohärent optischen Übertragungsverfahren in einem Übertragungssystem nur noch ein Mutteroszillator für die gesamte Trägeraufbereitung zuständig sein und beispielsweise als unmodulierter Träger mit übertragen werden, z.B. in einer speziellen Mono-Mode-Glasfaser.

Somit ergibt sich bei diesem speziellen System der gleichzeitigen Übertragung vieler, eng benachbarter Träger nach einem kohärent optischen Homodyn- oder Heterodyn-Verfahren folgende bemerkenswerte Konzeption, die allerdings erst durch die erfindungsgemäße Lösung der monolithischen optoelektronischen Integration der Modulatoren, der Zwischenverstärker mit und ohne Regeneration, der möglicherweise rechnergesteuerten Verzweiger und der Empfänger mit selektiver Demodulation technisch und wirtschaftlich realisierbar wird:

1. Der Oszillator und Lichtsender ist unmoduliert. Es werden alle aufwendigen Anstrengungen unternommen, um ihn stabil zu halten. Da er nur wenige Male im Übertragungssystem vorkommt, ist das auch kein prohibitiver Kostenfaktor. Die einzelnen, beispielsweise im Abstand von 4-15 GHz liegenden Träger können z.B. als longitudinale Moden eines einzigen Laser-Resonators erzeugt werden.

2. Der Modulator hat nur die Aufgabe, eine bestimmte Frequenz der von ihm ansonsten nicht gestörten Laser-Sender zu modulieren. Das Material des Modulators muß also nicht notwendig ein direkter Halbleiter sein. Die Verwendung eines aus der Mikrowellentechnik bekannten Isolators zwischen Laser und Modulator ist vorteilhaft /12/.

3. Wegen der jetzt zulässigen Verwendung von Silizium für den Modulator ist die erfindungsgemäße Nutzung dieses Materials von hohem technischen Werte, da so die gleichzeitige Integration von elektro-optischen Eigenschaften und elektronischen Eigenschaften auf einem Siliziumchip ermöglicht wird.

4. Eine ähnliche Anordnung wie der Modulator kann als Detektor für die wellenlängenselektive Umwandlung von mehreren Kanälen in elektrische Signale dienen.

5. Eine ähnliche Struktur wie in 4, ohne Demodulator, kann zur wellenlängenselektiven Verzweigung benutzt werden.

6. Die Verzweiger können entweder "passiv" und fest eingestellt sein oder einen Demultiplexer enthalten, der die elektronischen Kanäle für eine rechnergesteuerte Vermittlung zugänglich macht.

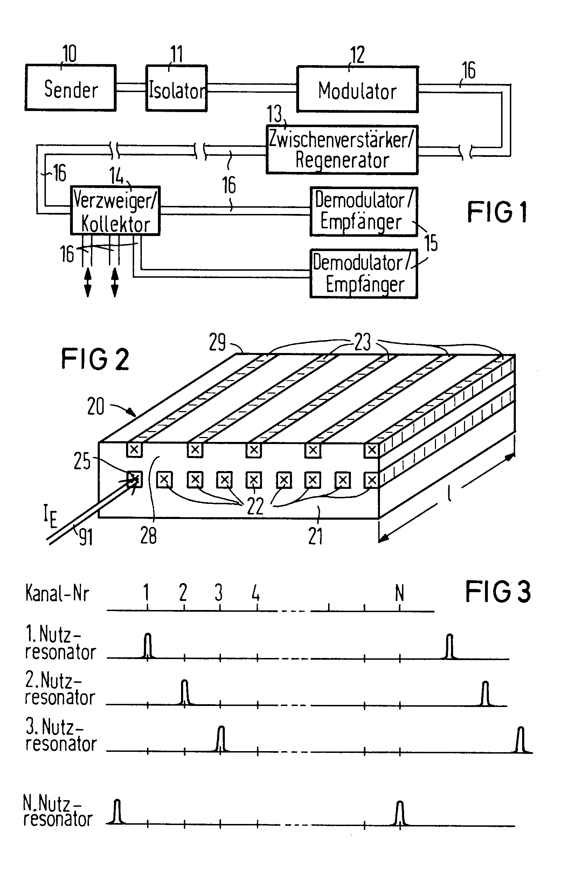

Das zu realisierende System, das durch die erfindungsgemäße und anschließend zu beschreibende Realisation seiner Grundbestandteile ermöglicht werden wird, hätte die in Figur 1 skizzierte Form. Es enthält die Grundbestandteile Sender 10, Isolator 11, Modulator 12, Zwischenverstärker/Regenerator 13, Verzweiger oder Kollektor 14, Demodulator/Empfänger 15, sowie Glasfaserleitungen 16. Die Polarisationsebene des Lichtes muß ev. mit bekannten Mitteln den lichtverarbeitenden Grundbestandteilen angepaßt werden. Dabei sind polarisationserhaltende Fasern von Vorteil.

In den Grundbestandteilen Koppler, Modulator, Zwischenverstärker/Regenerator, Verzweiger, Kollektor, Demodulator/Empfänger tritt mindestens eine der beiden folgenden Grundaufgaben auf:

1. Wellenlängenselektives Zusammenfassen mehrerer, auf der Eingangsseite auf verschiedenen elektrischen und/oder optischen Leitungen ankommender, Kanäle auf eine einzige optische Leitung auf der Ausgangsseite = Multiplexen.

2. Wellenlängenselektives Auftrennen mehrerer, auf der Eingangsseite auf einer einzigen optischen Leitung ankommender, Kanäle auf verschiedene optische und/oder elektrische Leitungen auf der Ausgangsseite = Demultiplexen.

Diese beiden Grundaufgaben können durch die erfindungsgemäße Resonatormatrix, die dann im folgenden auch "1-N-Koppler genannt wird, gelöst werden.

Dieses Element besteht aus einer einzigen Resonatormatrix, welche in der Lage ist, mehrere, auch sämtliche, optische Kanäle wellenlägenselektiv zu trennen und in verschiedene abgehende optische Leitungen einzukoppeln und/oder aufzuteilen. Dann wird dieser 1-N-Koppler "passiver Verzweiger" genannt. Der passive Verzweiger kann als optisch reziprokes Element auch in umgekehrter Richtung betrieben werden, dann wird er "Kollektor" genannt.

Über die oben erwähnten zwei Grundaufgaben hinaus ist eine einzige Matrixanordnung von Resonatoren auch in der Lage, wellenlängenselektiv mehrere, auch sämtliche, optische Kanäle zu trennen, getrennt zu modulieren und diese Kanäle wieder optisch auf eine Leitung zusammenzufügen. Dann wird die Matrixanordnung im folgenden "Modulator" genannt.

Weiterhin ist eine einzige Resonatormatrix in der Lage, mehrere, auch sämtliche, optische Kanäle wellenlängenselektiv zu trennen und in elektrische Signale umzuwandeln, die auf getrennten Leitungen elektrisch weiterverarbeitet werden. Dies kann durch eine auf das gleiche Chip integrierte Elektronik erfolgen. Dann wird die Matrixanordnung im folgenden "Demodulator/Empfänger" genannt.

Weiterhin ist eine Kombination von Resonatormatrizen in der Lage, mehrere, auch sämtliche, optische Kanäle wellenlängenselektiv zu trennen und in elektrische Signale umzuwandeln, die auf getrennten elektrischen Leitungen weiterverarbeitet werden, indem eventuell nach Regeneration der elektrischen Impulse, die elektrischen Kanäle, gesteuert beispielsweise durch einen Vermittlungsrechner, den Modulatoren verschiedener abgehender optischen Leitungen bei beliebiger Zuordnung zugeführt werden. Dann wird die Matrixanordnung im folgenden "rechnergesteuerter Verzweiger" genannt.

Eine einzige Matrixanordnung kann auch dazu verwendet werden, mehrere, auch sämtliche, optische Kanäle wellenlängenselektiv zu trennen, getrennt optisch zu verstärken und die verstärkten Kanäle wieder zusammenzuführen. Dann wird sie "Zwischenverstärker" genannt.

Unsere Erfindung, - eine Resonatormatrix, die derart auf ein Substrat integriert ist, daß die Resonatoren innerhalb verschiedener Ebenen und zwischen verschiedenen Ebenen unterschiedlich stark gekoppelt sind, und die mehrere modulierte oder unmodulierte Träger im Frequenzbereich der optischen Nachrichtentechnik wellenlängenselektiv trennen und/oder zusammenfügen kann, - löst die beiden oben erwähnten Grundaufgaben und bringt Lösungen für die in Figur 1 skizzierten Grundbestandteile des gesamten Nachrichtenübertragungssystems, wie in folgenden Beispielen dargestellt wird. Beispielhaft werden einige Nutzungen der aus einer Resonatormatrix abgewandelten optischen und/oder elektro-optischen integrierten Bauteile beschrieben.

Je nach Aufgabenstellung können zusätzlich zu erfindungsgemäßen Resonatormatrizen auch bekannte elektro-optische Elemente zu einer erfindungsgemäßen neuen Struktur mit integriert oder verwendet werden.

Beispiel 1) Modulator des Systems, realisiert durch Modulator der Erfindung.

Beispiel 2) Modulator des Systems, realisiert durch folgende Elemente a) bis c):

a) Einrichtung zum Trennen der Träger, realisiert durch Verzweiger der Erfindung.

b) N Modulatoren, die nach bekannten Prinzipien arbeiten, z.B. dem elektrooptischen Effekt.

c) Einrichtung zum Zusammenfügen der modulierten Träger, realisiert durch Kollektor der Erfindung.

Beispiel 3) Trägererzeugung und Modulation der Träger bei mehreren, verschiedenen Laseroszillatoren, Zusammenfügen der Träger durch Kollektor der Erfindung und nachfolgendem Modulator der Erfindung.

Beispiel 4) Trägererzeugung und Modulation der Träger bei mehreren, verschiedenen Laseroszillatoren, 2. Variante: Getrenntes Modulieren mit N Modulatoren, die nach bekannten Prinzipien arbeiten, und anschließendes Zusammenfügen der modulierten Träger durch Kollektor der Erfindung.

Beispiel 5) Empfänger/Demodulator des Systems, realisiert durch Demodulator/Empfänger der Erfindung.

Beispiel 6) Empfänger/Demodulator des Systems, realisiert durch den passiven Verzweiger der Erfindung mit nachfolgenden herkömmlichen Fotodioden, z.B. hergestellt aus reinem Si und/oder $Si_xGe_{1-x}$ /2/.

Beispiel 7) Zwischenverstärker mit Regenerator im System, bestehend aus folgenden Elementen a) bis d):

a) Empfänger/Demodulator des Systems nach Beispiel 5 oder 6.

b) Elektronische Schaltung zum Regenerieren der elektrischen Signale.

c) Einrichtung zum optischen Verstärken der übertragenen unmodulierten Träger.

d) Modulator des Systems nach Beispiel 1 oder 2 zum Modulieren der verstärkten Träger mit regenerierten elektrischen Signalen.

Beispiel 8) Vermittlungsstelle des Systems, realisiert durch rechnergesteuerten Verzweiger der Erfindung.

In den angeführten Beispielen 1 bis 8 erscheint in verschiedenem Gewande mit unterschiedlicher Aufgabenstellung die erfindungsgemäße Resonatormatrix, die im folgenden anhand der Figuren beschrieben wird. Es zeigen:

Figur 1

in schematischer Darstellung das vorstehend bereits beschriebene System, auf das die erfindungsgemäße Anordnung anwendbar ist,

Figur 2

in perspektivischer Darstellung den prinzipiellen Aufbau der erfindungsgemäßen Anordnung,

Figur 3

in einem Diagramm die in verschiedenen Nutzresonatoren angeregten Kanäle,

Figur 4

im Querschnitt Resonatoren verschiedener Breite,

Figur 5

im Querschnitt Resonatoren verschiedener Höhe,

Figur 6

im Querschnitt Resonatoren verschiedener Breite und Höhe,

Figur 7

im Querschnitt Resonatoren jeweils eingestellter Breite,

Figuren 8a und 8b

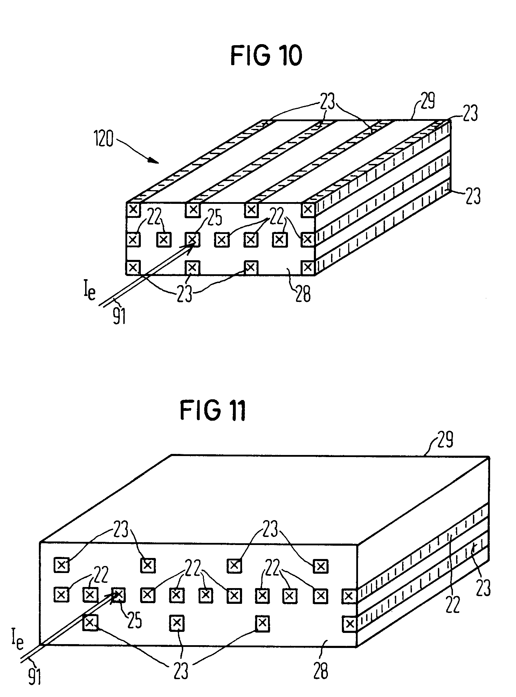

in Draufsicht jeweils vorgeschlagene Anordnung aus nebeneinanderliegenden Resonatoren mit voneinander verschiedenem Strahlungseinfall,

Figur 9

in perspektivischer Darstellung eine als Verzweiger benutzte erfindungsgemäße Anordnung,

Figur 10

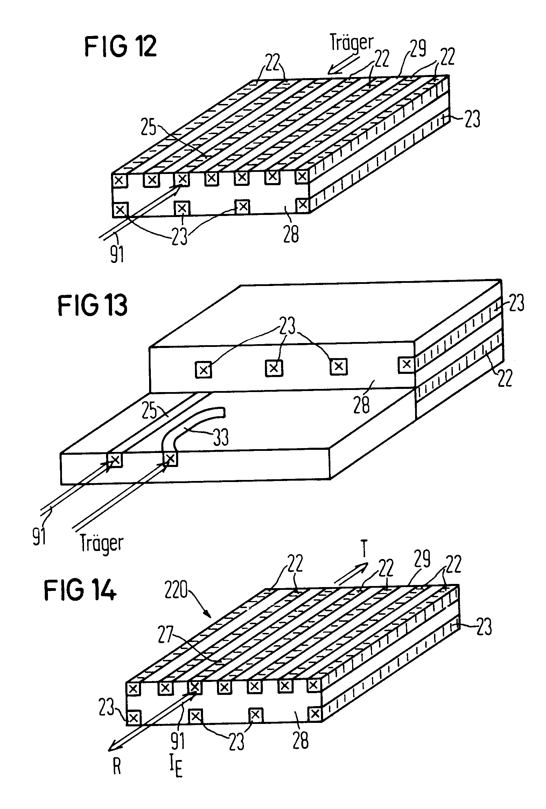

in perspektivischer Darstellung eine Verbesserungen für einen Empfänger/Demodulator bringende erfindungsgemäße Anordnung,

Figur 11

in perspektivischer Darstellung eine erfindungsgemäße Anordnung ähnlich der in Figur 10, wobei Nutzresonatoren in verschiedenen Ebenen versetzt angeordnet sind,

Figur 12

in perspektivischer Darstellung eine erfindungsgemäße Anordnung, bei welcher ein unmodulierter Träger einem Einkoppelwellenleiter direkt zugeführt ist,

Figur 13

in perspektivischer Darstellung eine erfindungsgemäße Anordnung nach Figur 12, bei welcher der unmodulierte Träger dem Einkoppelwellenleiter durch einen vorgeschalteten Koppler zugeführt ist,

Figur 14

in perspektivischer Darstellung eine erfindungsemäße Anordnung zur Modulation mehrerer Kanäle,

Figuren 15 bis 18

jeweils in einem Diagramm die prinzipiellen Auswirkungen einer Absoprtionserhöhung in den Nutzresonatoren (Transmissions und Reflexionskurven),

Figur 19

in perspektivischer Darstellung eine erfindungsgemäße Anordnung mit verbesserter Nebensprechdämpfung, die als Empfänger/Demodulator oder mehrkreisiger Zwischenverstärker verwendbar ist,

Figur 20

in perspektivischer Darstellung eine als 1-N-Koppler verwendbare erfindungsgemäße Anordnung,

Figur 21

in perspektivischer Darstellung eine als mehrkreisiger Modulator verwenbare erfindungsgemäße Anordnung,

Figur 22

in schematischer Darstellung eine mit einer erfindungsgemäßen Anordnung auf dem gleichen Substrat integrierte elektronische Vermittlerschaltung,

Figur 23

in schematischer Darstellung eine Vermittlung für Glasfaserleitungen,

Figur 24

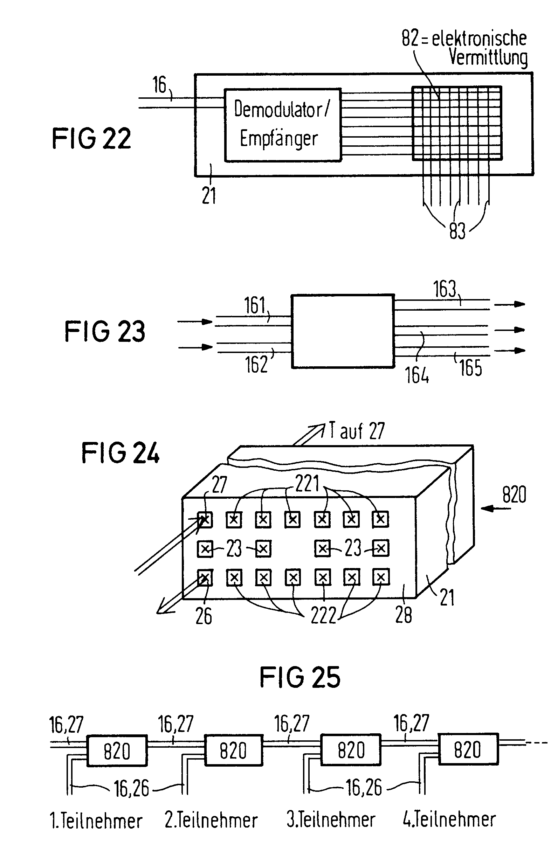

in perspektivischer Darstellung eine mit einer erfindungsgemäßen Anordnung gebildete optische Vermittlung,

Figur 25

in schematischer Darstellung eine Vermittlungsschal tung mit optischen Vermittlungen nach Figur 24,

Figuren 26 bis 31

in perspektivischer Darstellung verschiedene Verfahrensschritte bei einem achtstufigen Herstellungsverfahren der für die erfindungsgemäße Anordnung,

Figur 32

in perspektivischer Darstellung einen modifizierten Verfahrensschritt, mit welchem auf zwei Verfahrensschritte des achtstufigen Verfahrens verzichtet werden kann,

Figur 33

in perspektivischer Darstellung eine erfindunsgemäße Anordnung mit u-förmigen Kontakten,

Figur 34

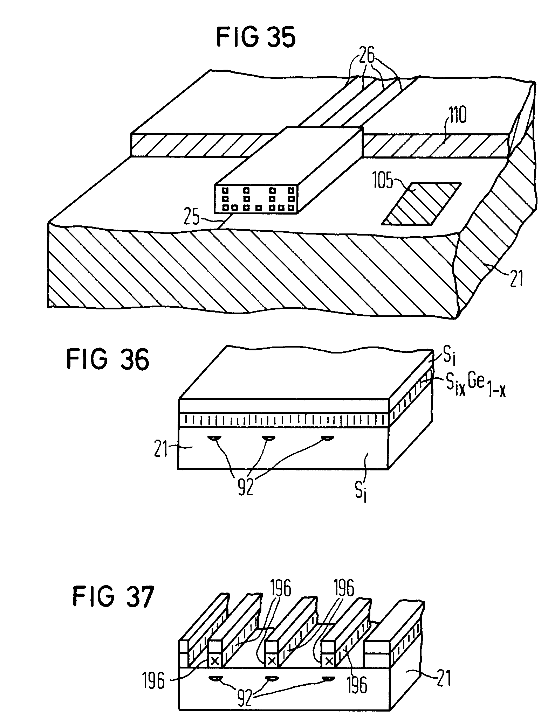

in perspektivischer Darstellung eine auf einer Substratscheibe ausgebildete erfindungsgemäße Anordnung mit elektrischen Kontakten,

Figur 35

in perspektivischer Darstellung eine auf einer Substratscheibe ausgebildete erfindungsgemäße Anordnung mit angekoppelten Wellenleitern,

Figur 36

in perspektivischer Darstellung eine Alternative einer der acht Herstellungsschritte,

Figur 37

in perspektivischer Darstellung die Alternative nach Figur 36 nach Ätzung von Schächten,

Figur 38

in perspektivischer Darstellung eine Substratscheibe mit eingeätzten Löchern,

Figur 39

in perspektivischer Darstellung eine Substratscheibe mit anisotrop eingeätzten Löchern mit abgerundeten Ecken,

Figur 40

in perspektivischer Darstellung ein um 90° gedrehtes Substrat für bestimmte Herstellungsschritte parallel zu einer Resonatorebene,

Figur 41

in bruchstückhafter perspektivischer Darstellung eine erfindungsgemäße Anordnung mit versetzt zwischen Koppelresonatoren angeordneten Nutzresonatoren, und

Figur 42

in bruchstückhafter perspektivischer Darstellung eine erfindungsgemäße Anordnung, bei welcher eine Koppelresonatorebene an einem Ende Nutzresonatoren enthält.

Figur 2 gibt den prinzipiellen Aufbau dieser Matrix wieder. Die Gesamtmatrix 20 hat als Basis ein Substrat 21, z.B. aus hoch reinem Silizium bestehend. Darüber sind immer wenigstens auf 2 Ebenen optische Resonatoren 22 und 23 angeordnet. Ein einzelner Resonator 22 und 23 besteht dabei aus einem mehrmodigen oder vorzugsweise einmodigen dielektrischen Wellenleiter, dessen Endflächen verspiegelt sind. Die Anwendung der Resonatoren erfolgt immer matrixartig, d.h. die Resonatoren werden nicht nur flächig in einer Ebene oder gekrümmten Fläche angeordnet, sondern derart, daß mindestens ein schmalbandiger Resonator außerhalb der ersten Ebene oder gekrümmten Fläche liegt, die die anderen oder ein Teil der anderen Resonatoren aufspannen/ aufspannt.

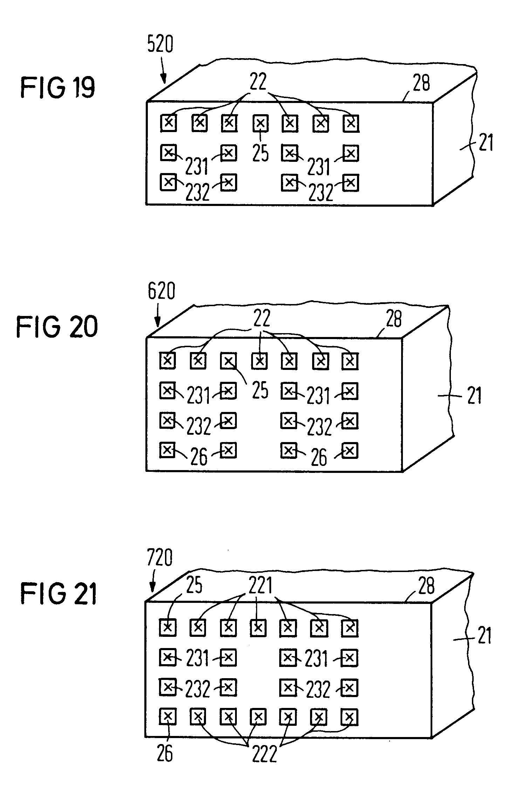

Die Resonatoren sollen mit benachbarten Resonatoren je nach Aufgabe durch den unterschiedlichen geometrischen Abstand und/oder durch geänderte Brechzahl des dazwischen liegenden Mediums entweder stark oder schwach oder möglichst gering, d.h. am besten nicht optisch gekoppelt sein. Eine Resonatormatrix enthält also immer Resonatoren, die untereinander stark gekoppelt sind und in diesem Kontext Koppelresonatoren 22, in späteren Beispielen auch 221 und 222; genannt werden, und sie enthält immer Resonatoren, die einerseits mit anderen Resonatoren schwach oder andererseits nicht d.h. möglichst gering gekoppelt sind, und die in diesem Kontext Nutzresonatoren 23, in späteren Beispielen auch 231 und 232, genannt werden. Diese Resonatoren werden wie im Beispiel von Fig.2 in verschiedenen Ebenen angeordnet, wobei jede Ebene bevorzugt entweder nur Nutz- oder Koppelresonatoren enthält. Die Matrix 20 von Fig.2 enthält beispielsweise nur zwei Ebenen von Resonatoren, die übereinander angeordnet sind. Eine Resonatormatrix kann auch mehr als zwei Ebenen enthalten, wie z.B. in den später beschriebenen Beispielen von Fig.10, 11 oder auch Fig.19 bis 21. Die möglichst geringe Kopplung wird dadurch erzielt, daß die Abstände der Nutzresonatoren untereinander groß gewählt werden. Deshalb liegt in Fig. 2 nicht über jedem Koppelresonator 22 ein Nutzresonator 23. Ein weiterer Nutzresonator 23 liegt hier beispielsweise erst wieder über dem 2. benachbarten Koppelresonator 22, kann aber auch erst über dem 3. oder 4. liegen, siehe z.B. Fig. 11. Sind die Nutz- und Koppelresonatoren nach Ebenen getrennt angeordnet, sind zwei benachbarte Resonatoren, die in zwei verschiedenen, aber benachbarten Ebenen liegen, untereinander schwach gekoppelt. Der genaue Wert der Kopplung muß dann jedoch nicht zwischen allen Ebenen gleich sein. Die Kopplungen in jeder Ebene und von Ebene zu Ebene und damit die Abstände der Resonatoren sind optimierbar. Das gilt sowohl in Bezug auf ihre Funktionsfähigkeit, wie Bandbreite und Wirkungsgrad, als auch bezüglich der Einfachheit der Herstellung. Dies schließt den in Bezug auf die Wirkungsweise mit vielen Nachteilen verbundenen Grenzfall ein, daß die Koppelresonatoren einer Ebene zu einer Platte zusammenwachsen.

Die Koppelresonatoren 22 haben die Aufgabe, die Energie in der gesamten Bandbreite des ankommenden Gesamtsignals in der Koppelresonatorebene zu verteilen und haben deshalb starke Kopplung. Die einzelnen Nutzresonatoren 23 haben die Aufgabe, das Licht wellenlängenselektiv zu beeinflussen und haben deshalb möglichst geringe Kopplung untereinander. Licht einer Wellenlänge wird dann nämlich aufgrund der schwachen Ankopplung eines Nutzresonators an den ihm benachbarten Resonator einer Nachbarebene nur in diesen übergekoppelt, wenn der Nutzresonator für diese Wellenlänge in Resonanz ist. Seine Bandbreite und damit seine Ankopplung an einen Koppelresonator soll nur der Bandbreite eines Teilsignales entsprechen.

In den verschiedenen Figuren sind 28 die Vorderseite und 29 die Rückseite der Resonatormatrix, die eventuell mit der Ausnahme der Einkoppel und/oder Auskoppelwellenleiter als eine Einheit z.B. durch das Aufbringen optischer Schichten verspiegelt werden können, um eine hohe Resonanzgüte zu erreichen.

Wellenleiter, die Licht in die gesamte Resonatormatrix nur einkoppeln, werden in den Figuren mit 25 bezeichnet, Wellenleiter, die Licht nur auskoppeln, mit 26, und Wellenleiter, die Licht ein- u. auskoppeln, mit 27.

Ein wesentlicher Vorteil der Verteilung der Energie über räumlich ausgedehnte Bereiche der Anordnung durch Koppelresonatoren und deren gezielte, wellenlängenselektive Konzentration auf einige wenige gewünschte Bereiche dieser Anordnung in den Nutzresonatoren besteht darin, daß er auf der Kopplung streng paralleler Wellenleiter und nicht etwa auf der gekreuzten oder gebogenen Anordnung von Wellenleitern und Resonatoren beruht. Erst dadurch können Lichtverluste wirksam verhindert werden und eine wellenlängenselektive 1-N-Auftrennung bzw. Zusammenfügung der Energien mit sehr hohem Wirkungsgrad durchgeführt werden.

Die wellenlängenselektive Wirkungsweise einer Resonatormatrix beruht immer darauf, daß die Energie durch die Koppelresonatoren auf die Nutzresonatoren verteilt wird und die Nutzresonatoren wie z.B. nach Figur 3 auf die einzelnen Kanäle abgestimmt sind.

Wichtig ist, daß in den meisten Anwendungen eine Resonanz eines Nutzresonators auf einen Kanal abgestimmt ist und daß weitere Resonanzen des gleichen Nutzresonators nicht mit anderen Kanälen zusammenfallen. Ist nämlich der Resonator viele Wellenlängen $\lambda_1$ lang, z.B. $I = n \cdot \lambda_1/2$, so kann bei einer Wellenlänge $\lambda_2$, z.B. bei $(n\pm1) \cdot \lambda_2/2$ wieder Resonanz auftreten. Die weiteren Resonanzen des Nutzresonators können außerhalb der N Kanäle liegen, wie in Figur 3., oder im Zwischengebiet zweier Kanäle. Für einige Anwendungen, wie es z.B. beim Gegentaktmodulator erwähnt wird, ist es auch wichtig, daß zwei oder mehr Nutzresonatoren auf eine Wellenlänge abgestimmt sein können. Die Nutzresonatoren beeinflussen die einzelnen Kanäle wellenlängenselektiv, indem sie das Licht des betreffenden Kanals absorbieren, verstärken, in einen weiteren Wellenleiter überkoppeln usw.

Die Nutzresonatoren wellenlängenmäßig benachbarter Kanäle liegen bevorzugt auch geometrisch nebeneinander, für die Wirkungsweise ist dies jedoch nicht unbedingt erforderlich.

Für viele Anwendungen können die Resonanzwellenlängen der einzelnen Koppelresonatoren einer Resonatormatrix auf eine Wellenlänge abgestimmt werden, die z.B. in der Mitte der zu beeinflussenden Trägerwellenlängen liegt. Für einige Anwendungen kann es auch günstig sein, die einzelnen Koppelresonatoren auf verschiedene Wellenlängen abzustimmen, z.B. auf Wellenlängen, die in systematischer Weise ansteigen oder abfallen.

Figur 2 zeigt eine erste Anordnung 20 einer Resonatormatrix mit in einer unteren Ebene gelegenen Koppelresonatoren 22 und einer darüber gelegenen Ebene von Nutzresonatoren 23. Die gewünschte Wellenlängenselektion geschieht entscheidend über die eingestellten Resonanzen der Nutzresonatoren.

Diese optischen Resonatoren werden erzeugt durch im Substrat 21 eingebettete Wellenleiterstrukturen 22 und 23, hervorgerufen durch eine gegenüber dem Substrat erhöhte Brechzahl, und die Reflektoren 28 und 29 an den beiden Endflächen der Wellenleiter.

Die Resonatoren bestehen also aus an den Endflächen verspiegelten dielektrischen Wellenleitern, die in diesem Kontext auch dann als solche bezeichnet werden, wenn im Halbleiter bewegliche und/oder ortsfeste Ladungen vorhanden sind, und somit kein reiner Nichtleiter vorliegt.

Die gekoppelten Resonatoren wirken nach folgenden Prinzip: Ist ein Resonator an einem parallel zu ihm verlaufenden Wellenleiter durch Wellenleiterkopplung schwach angekoppelt, dann wird er das Licht im Wellenleiter nur sehr gering beeinflussen, wenn er nicht in Resonanz ist. Nur bei Resonanz ergeben die Teilwellen, die im Resonator hin und her laufen durch konstruktive Interferenz im Resonator ein Wellenfeld mit hohen Amplituden. Dieses Wellenfeld wird teilweise wieder in den parallelen Wellenleiter zurückgekoppelt, und interferiert mit dem Feld des Wellenleiters. Im Falle der Resonanz kann auf diese Weise das in den Wellenleiter eingestrahlte Feld weitgehend ausgelöscht und eine reflektierte Welle erzeugt werden. Auf einer entsprechenden Wirkung beruht die Kopplung zweier paralleler Resonatoren.

In den Anmeldeschriften DE-A-32 27 683.4 und DE-A-32 27 682.6 für die serielle Anordnung von Absorptionsresonatoren wird das Licht nicht wie oben beschrieben parallel eingekoppelt, sondern durch die Spiegel von Resonatoren hoher Güte in nachfolgende Resonatoren gekoppelt. Da die Resonatoren für die geforderte hohe Güte Reflektionsfaktoren nahe 1 haben müssen, und solche Spiegel hohe Verluste der transmittierten Energie aufweisen, geht sehr viel Energie, die in nachfolgende Resonatoren gelangen sollte, in den Spiegeln verloren. Diesen gravierenden Nachteil vermeidet eine parallele Anordnung von Resonatoren.

Da die Energie in den Resonatormatrizen nicht durch die verspiegelten Endflächen der Resonatoren, sondern parallel über die Wellenleiterstruktur in die einzelnen Resonatoren eingekoppelt wird, ist es für die Wirkungsweise der Resonatorstruktur günstig, ja sogar wesentlich, daß alle angesprochenen Nutz- und Koppelresonatoren 22, 23, 221, 222, 231, 232 mit Reflektoren verspiegelt sind, die große Reflektionsfaktoren in der Nähe von 1 aufweisen, die aber nicht durchstrahlt werden müssen. Nur die Ein- und/oder Auskoppelwellenleiter in den verschiedenen Fig. mit 25, 26 und 27 bezeichnet,brauchen nicht verspiegelt zu sein. Diese Wellenleiter 25, 26 oder 27 können aber einseitig mit Spiegeln hoher Reflektionsfaktoren, z.B. beim 1-N Koppler, verspiegelt sein oder beidseitig mit Spiegeln mit nicht so großen Refektionsfaktoren, so daß sie im Gegensatz zu den Nutz- und Koppelresonatoren nur sehr breitbandige Resonatoren bilden. Deshalb werden die Elemente 25, 26 und 27 in diesem Kontext nicht als Resonatoren, sondern immer als Ein- und/oder Auskoppelwellenleiter angesprochen. Breitbandige Resonatoren haben Spiegel mit kleinen Reflektionsfaktoren, deshalb spielen Transmissionsverluste bei ihnen keine Rolle.

Ein- und/oder Auskoppelwellenleiter die das Licht zunächst in eine Ebene von Koppelresonatoren 22 ein oder auskoppeln sollen, wie z.B. 25 in Fig. 2, können auch außerhalb der Ebene der Koppelresonatoren 22 angeordnet werden, also über oder unter der Ebene der Koppelresonatoren, sie müssen jedoch an einem der Koppelresonatoren stark angekoppelt sein und zu ihm im wesentlichen parallel verlaufen.

Die Resonanzwellenlänge des einzelnen Resonators ist durch den optischen Weg des ihn bildenden Wellenleiters bestimmt. Eine gezielte Einstellung eines Resonators auf eine gewünschte Resonanzwellenlänge erfolgt daher über eine entsprechend einzustellende Länge des optischen Weges $l_{opt}$, der durch $l_{opt} = n_{eff} \cdot l$ bestimmt ist; $n_{eff}$ ist die durch die Phasenkonstante $\beta$ und die Vakuumwellenzahl k definierte effektive Brechzahl des Wellenleiters $n_{eff} = \beta/k$; l ist die geometrische Länge des Resonators. Eine Beeinflussung von $l_{opt}$ kann daher entweder über die Wahl der geometrischen Länge des Resonators oder über dessen effektive Brechzahl erfolgen Eine Möglichkeit zur Einstellung der Resonatoren der Resonatormatrix auf die gewünschten unterschiedlichen Resonanzwellenlängen ist die gezielte Schrägstellung der Spiegelendflächen 28 und 29 gegeneinander, welche dadurch zustande kommt, daß die Winkel $\gamma$ und/oder $\phi$ in Figur 9 Werte ungleich 90° annehmen. Die Resonatoren 22 und 23 sind auf verschiedene Resonanzwellenlängen abgestimmt aufgrund der jeweils anderen Resonatorlängen l, deren unterschiedliches Maß für jeden der Resonatoren sich aus der Schrägstellung der Reflektoren 28 und 29 ergibt. Eine solche Abstimmung ist eine technologisch relativ einfach zu realisierende Maßnahme. Ferner können die Winkel $\delta$ und/oder $\tau$ ungleich 90° sein.

Eine andere mögliche Methode der Resonanzeinstellung besteht darin, gezielt die effektive Brechzahl $n_{eff}$ der einzelnen Resonatoren einzustellen. Dies kann durch eine passende Wahl des Brechungsindex des jeweiligen Wellenleiters oder durch passende Wahl der Abmessungen des jeweiligen Wellenleiterquerschnitts erfolgen, wobei auch die Wahl des Brechungsindexes der Umgebung des Resonators mitberücksichtigt werden muß.

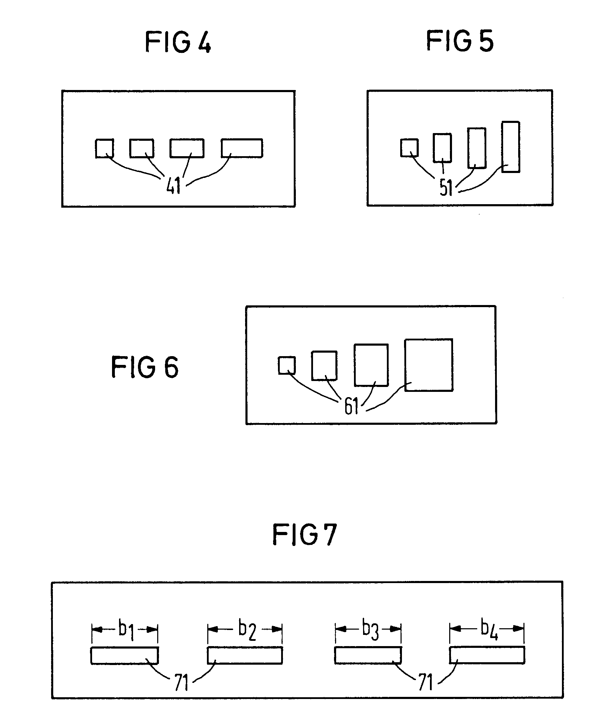

Bei letzterem wird der bekannte Effekt genutzt, daß bei gleicher Wellenlänge und gleichen Profil der Brechzahlsprünge zwischen Kern und Mantel zweier Wellenleiter die effektive Brechzahl eines Wellenleiters mit größerem Querschnitt höher ist als die eines Wellenleiters mit geringerem Querschnitt, Eine systematische Variation der Wellenleiterquerschnitte und/oder der Profile würde daher ebenfalls eine entsprechende Variation der Resonanzwellenlängen der Resonatoren zur Folge haben. Dabei kann die Breite der Resonatoren 41 wie in Figur 4, die Höhe der Resonatoren 51 wie in Figur 5 oder auch Breite und Höhe der Wellenleiter 61 wie in Fig. 6 variieren. In diesen Beispielen sind die Formvariationen von jeweils vier Wellenleitern übertrieben stark gezeichnet. Um an die Herstellungstoleranzen dieser systematischen Querschnittsänderungen möglichst geringe Forderungen stellen zu müssen, kann man die Tatsache nutzen, daß bei Wellenleitern mit langgestreckt rechtförmigem Querschnitt eine Variation der Ausdehnung der breiten Seite nur eine geringe Variation der effektiven Brechzahl des Wellenleiters zur Folge hat. Mit einer Anordnung von Wellenleitern 71 entsprechend dem Beispiel von Figur 7 kann man daher sehr genau die effektive Brechzahl und damit die Resonanzwellenlänge durch Einstellung der Breite $b_1 < b_2 < b_3 < b_4$ festlegen. Selbstverständlich ist auch eine Kombination all dieser Einstellungsmöglichkeiten denkbar.

Auch das sogenannte Profil des Brechzahlverlaufes im Resonator senkrecht zur Längsachse kann zur Einstellung der Resonanz verwendet werden. Entsprechend kann auch der Effekt des "Verschmierens" des Profiles durch "Ausdiffusion" einer anfänglich sprunghaften Änderung der Brechungsindices bei höheren Temperaturen genutzt werden. Die oben genannten höheren Temperaturen zur Verschmierung des Profiles können auch gezielt auf einen bestimmten; abzustimmenden Resonator konzentriert werden, indem man beispielsweise mit einer Laserbestrahlung lokal erhitzt und so Feinheiten von $l_{opt}$ der Einzelresonatoren beeinflußt.

Für diese Einstellung der Resonanzwellenlängen der Resonatormatrix wird gefordert, daß die Resonanzwellenlängen relativ zueinander richtig eingestellt sind, speziell, daß der relative Abstand der Resonanzwellenlängen dem gewünschten relativen Kanalabstand entspricht. Eine Einstellung der Gesamtanordnung auf den gegebenen Trägerwellenlängen-Raster wird durch einen geeigneten, elektronisch geregelten Abstimmungsmechanismus erfolgen, z.B. auch unter Zuhilfenahme von Pilotfrequenzen. Für die Pilotfrequenzen können auch mitübertragene unmodulierte Träger verwendet werden. Diesem Abstimmechanismus kann z.B. die gesteuerte thermische Ausdehnung der Resonatormatrix durch z.B. Peltier-Elemente oder die mechanische Längeneinstellung durch Piezo-Kristalle zu Grunde liegen.

Im folgenden werden noch einige erfindungsgemäße Ausführungen der Resonatormatrix dargestellt.

1. Die Resonatormatrix als Verzweiger (Fig.9) Der prinzipielle Aufbau eines passiven Verzweigers der Erfindung ist dargestellt in Figur 9. Die Resonatormatrix besteht aus drei Ebenen: Eine Ebene besteht aus Koppelresonatoren 22 mit einem Einkoppelwellenleiter 25, einer Ebene aus Nutzresonatoren 23, die durch ihre Resonanzwellenlängen festlegen, welche Wellenlänge in einen bestimmten Auskoppelwellenleiter 26 der dritten Ebene übergekoppelt wird. Das Verhältnis der Intensitäten $I_{1i}$ zu $I_{2i}$ in Figur 9 kann durch die Reflektionsfaktoren der Spiegel eingestellt werden.

2. Die Resonatormatrix als Kollektor (Fig.9 ) Benutzt man die Auskoppelwellenleiter nach Fig. 9 als Einkoppelwellenleiter und den Einkoppelwellenleiter als Auskoppelwellenleiter, dann wird die Aufgabe des Zusammenfügens von Kanälen erfüllt, da die Anordnung optisch reziprok ist.

Wie bei der Verwendung der Resonatormatrix als Verzweiger der Erfindung, sollen alle Teile der Anordnung auch hier möglichst geringe Dämpfung aufweisen.

Für die eben geschilderten Ausführungsformen 1 und 2 gilt noch folgende Bemerkung: Man kann zur Auskopplung nach Form 1 oder zur Einkopplung nach Form 2 die Nutzresonatoren 23 auch direkt verwenden, wenn man die hohen Reflektionsfaktoren dieser Nutzresonatoren ein wenig herabsetzt, sodaß beispielsweise ein angekoppelter Wellenleiter die Intensitäten $I_{1i}$ und $I_{2i}$ direkt an den Resonatoren 23 abgreifen kann. Die Ebene der speziellen Wellenleiter 26 entfällt dann, auch Zwischenstufen dieser beiden Arten der Auskopplung sind denkbar.

Ein 1-N-Koppler, z.B. ein passiver Verzweiger, kann auch im Duplexbetrieb verwendet werden. D.h., daß,die in Fig.9 auf dem Wellenleiter 25 ankommenden Kanäle 91 wellenlängenselektiv getrennt werden und Wellenlängen, die im Wellenleiter 26 in Gegenrichtung zu $I_{1i}$ oder $I_{2i}$ eingestrahlt werden, auf dem Wellenleiter 25 zusammengefaßt werden und in umgekehrter Richtung wie 91 laufen. Dies gilt sinngemäß auch für andere Matrixanordnungen.

3. Die Resonatormatrix als Empfänger/Demodulator (Fig 10-13)
Aus dem Patent DE-A-32 05 461.O ist der Effekt der Absorptionserhöhung in einem Resonator mit hoher Güte und kleinen Absorptionskoeffizienten bekannt. Ein Resonator absorbiert in der Umgebung seiner Resonanzwellenlänge auch dann eine wesentliche Lichtintensität, wenn er Material mit einem sehr kleinen Absorptionskoeffizienten enthält, das bei der gleichen Wellenlänge ohne Resonator sehr wenig Licht absorbieren würde. Im Falle des Empfängers befindet sich der Resonator im Bereich eines p-n-Übergangs einer Fotodiode. Wegen des Zusammenhangs von Resonanz und Absorption erfolgt die Absorption bzw. Lichtdetektion in einer derartigen Fotodiode mit Resonator mit kleinen Absorptionskoeffizienten sehr schmalbandig und wellenlängenselektiv.

Nach der nicht vorveröffentlichten Patentanmeldung DE-A -33 29 719.3 ist eine Anordnung aus integrierten, parallelen, gekoppelten, absorbiereriden Resonatoren ebenfalls bekannt. Allerdings ist dort noch nicht die entscheidende Bedeutung der in einer Ebene parallel angeordneten und stark untereinander gekoppelten Koppelresonatoren erkannt.

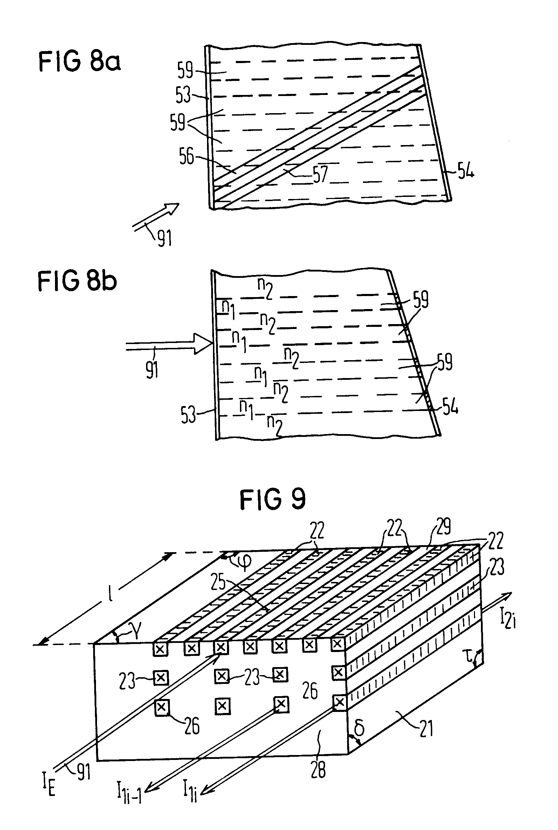

Die Anordnung nach Anmeldung DE-A-33 29 719.3 besteht siehe Figur 8 a der vorliegenden Anmeldung aus nebeneinanderliegenden gekoppelten Resonatoren 59, die nur in einer einzigen Ebene liegen, und die mit den Spiegeln 53 und 54 verspiegelt sind. Höchstens die Einkoppelwellenleiter 56, 57 für die einfallende Strahlung 91 der Intensität $I_e$, die dann aber schräg zu den parallelen Resonatoren verlaufen müssen und diese kreuzen, dürfen in dieser Anordnung außerhalb der Ebene der gekoppelten Resonatoren 59 verlaufen. Diese "alte" Anordnung hat daher folgende Schwächen, die eine technische Anwendung erschweren: Die Kreuzungen von Resonatoren und Einkoppelwellenleiter haben wegen der dort auftretenden Modenkonversionen bzw. der Anregung von Strahlungsmoden an den Kreuzungsstellen starke Verluste zur Folge. Außerdem benötigt die Anordnung von Figur 8 eine relativ starke Kopplung aller Resonatoren, die Licht schmalbandig absorbieren sollen, untereinander für einen ausreichenden Energietransport zwischen allen Resonatoren. Das bewirkt einerseits relativ breite Absorptionsresonanzen, andererseits auch unregelmäßige Verschiebungen derjenigen Resonanzen, welche für die ungekoppelten Resonatoren gelten würden; d. h. es besteht kein linearer Zusammenhang zwischen Nutzresonanzen und Geometrie, eine Tatsache, die zu Abstimmungsschwierigkeiten führt. Insgesamt ist diese Anordnung damit nur für Anwendungen mit wenig Resonatoren geeignet.

Die Resonatormatrix der vorliegenden Erfindung nach Figur 1O in der Ausführungsform 12O bringt hingegen für den Empfänger/Demodulator folgende wesentliche Verbesserungen. Da die Resonatoren 22 und 23 nicht nur nebeneinander liegen, sondern mindestens in zwei Ebenen angeordnet werden, steht eine Ebene, nämlich die Ebene der stark gekoppelten Koppelresonatoren 22 zur Energieverteilung zur Verfügung, sodaß die Resonanzen der schwach gekoppelten, zur Lichtdetektion im p-n-Übergang einer Fotodiode genutzten, Nutzresonatoren 23 jetzt nicht wesentlich verbreitert werden. Im Gegensatz zum Stand der Technik und zu der in der Patentanmeldung DE-A-33 29 719.3, - dessen erster Patentanspruch ausdrücklich eine Wellenleiterkopplung zwischen den Absorptionsresonatoren 59 der Figur 8 fordert - beschriebenen Lehre zum technischen Handeln und zu den vom Fachmann aus der eben genannten Anmeldung zu ziehenden Lehren sind in der erfindungsgemäßen Resonatormatrix gemäß Fig.10 mit voller Absicht und mit entsprechendem Vorteil die Nutzresonatoren 23, die Licht aufgrund der Resonatorwirkung wellenlängenselektiv und auf die einzelnen Träger abgestimmt absorbieren sollen, in mindestens einer zusätzlichen Ebene so angeordnet, daß sie von benachbarten Resonatoren der gleichen Art 23 weit entfernt sind, und daß sie mit diesen durch Wellenleiterkoppung nicht oder doch so gering wie möglich in Verbindung stehen. Dies sorgt einerseits für die Schmalbandigkeit der Absorption und andererseits dafür, daß die Resonanzen der Nutzresonatoren 23 so erhalten bleiben, als ob sie nicht gekoppelt wären.

Das ankommende Licht wird in einen einzigen Einkoppelwellenleiter 25 eingekoppelt.

Die Verwendung von mehreren Ebenen macht bei der Detektion von Licht mittels Resonatoren erst die Konstruktion auch eines "mehrkreisigen" Empfänger-Systems möglich, wie später noch gezeigt wird.

Enthält eine Resonatormatrix eine zweite Ebene von Nutzresonatoren, dann können an einen Koppelresonator 22 zwei Nutzresonatoren 23 angekoppelt sein wie in Figur 1O. Es ist jedoch auch eine Resonatormatrix möglich, in der die Nutzresonatoren verschiedener Ebenen wie in Figur 11 versetzt angeordnet sind.

Da in den Koppelresonatoren aufgrund der starken gegenseitigen Kopplungen die absorptionserhöhende Wirkung von Resonatoren hoher Güte nicht oder nur sehr gering auftritt, kann die Raumladungszone der in Sperrichtung gepolten Fotodioden, auch die Ebene der Koppelresonatoren einschließen. Auf jeden Fall muß die Raumladungszone einer Fotodiode bezüglich der Nutzresonatoren aber nur den/die ihr wellenlängenmäßig zugehörigen Nutzresonator/en einschließen, da dort die wellenselektive Absorption des Lichts erfolgt.

Wenn im Empfänger die Demodulation mittels eines bekannten Heterodyn-oder Homodyn-Verfahrens durchgeführt werden soll, muß jedem Empfängerkanal der zugehörige Träger zugeführt werden. Dies kann z.B. dadurch erfolgen, daß die unmodulierten Träger dem Einkoppelwellenleiter 25 nach Figur 12 zugeführt werden, also von der anderen Seite wie die modulierten Kanäle, oder nach Figur 13 durch einen vorgeschalteten Koppler 33 zugeführt werden, vorzugsweise einem 3 dB Koppler. Die wellenlängenselektive Trennung der unmodulierten Träger erfolgt wieder in den Nutzresonatoren.

Die weitere Verarbeitung der elektrischen Signale erfolgt nach dem Stand der Technik je nach verwendeter Modulationsart, d.h. z.B. Amplituden-, Frequenz-, Phasenmodulation, etc. Die dazu benötigte Elektronik kann auf das gleiche Halbleitermaterial wie die Empfänger/Demodulator-Resonatormatrix integriert werden.

4. Die Resonatormatrix als Modulator (Fig.14-18)

Eine weitere Resonatormatrix 22O nach Figur 14 kann auch zur Modulation von mehreren, auch sämtlichen, Kanälen des Eingangssignals $I_e$ benutzt werden. Wie bereits erwähnt, erfüllt der Modulator bestehend aus einer Resonatormatrix durch sein Prinzip in einer geometrischen Anordnung folgende Aufgaben:

- Trennen vieler Träger
- Modulieren der einzelnen Träger unabhängig voneinander
- Zusammenfügen der modulierten Träger

Figur 14 enthält nur zwei Ebenen, auch bei dieser Anordnung sind wie in Figur 1O oder 11 jedoch drei Ebenen denkbar.

Im folgenden wird die Wirkungsweise einer Modulator-Resonatormatrix beschrieben: Die Eigenschaften der Gesamtanordnung lassen sich durch die Kurven der Reflektion und Transmission in Abhängigkeit von der Wellenlänge beschreiben. T bedeutet transmittierte Energie, R reflektierte Energie jeweils bezogen auf die einfallende Energie. T und R sind die im Prinzip beide nutzbaren Ausgangssignale der Anordnung.

Die Modulation wird durch eine wellenlängenselektive, nur in der Umgebung einzelner Träger liegende, Beeinflussung der Transmissions- oder Reflektionskurven realisiert. Die Parameteränderung an einem einzelnen Nutzresonator 23 soll einen einzelnen Kanal beeinflussen.

Als mögliche Parameter, deren Variation zu einer Intensität- und/oder Phasenmodulation der einzelnen Träger führt, stehen zur Verfügung:

- Änderung der Absorption im Nutzresonator, z.B. durch Ladungsträgerinjektion mit Hilfe eines p-n Überganges.
- Resonanzwellenlängenverschiebung in Nutzresonator durch z.B. elektro-optischen Effekt, Ladungsträgerinjektion.
- Änderung der Ankopplung des Nutzresonators an die Koppelresonatoren, z.B. bewirkt durch den elektro-optischen Effekt.

Die Figuren 15, 16, 17, 18 zeigen die prinzipiellen Auswirkungen einer Absorptionserhöhung in den Nutzresonatoren auf die Transmissions- und Reflektionskurven T und R anhand eines Beispiels von drei Nutzresonatoren. $\alpha$ bezeichnet dabei jeweils den Absorptionskoeffizienten. Figur 15: Transmission und Reflektion der Koppelresonatoren, Kopplung der Nutzresonatoren vernachlässigbar. Figur 16: Transmission und Reflektion, drei angekoppelte Nutzresonatoren, $\alpha = 1OO\frac{1}{m}$ in den drei Nutzresonatoren. Figur 17: Transmission und Reflektion, drei angekoppelte Nutzresonatoren, $\alpha = 1OOO\frac{1}{m}$ in den drei Nutzresonatoren. Figur 18:

Transmission und Reflektion, drei angekoppelte Nutzresonatoren $\alpha = 100\frac{1}{m}$ im 1. und 3. Nutzresonator, $\alpha = 1000\frac{1}{m}$ im zweiten Nutzresonator.

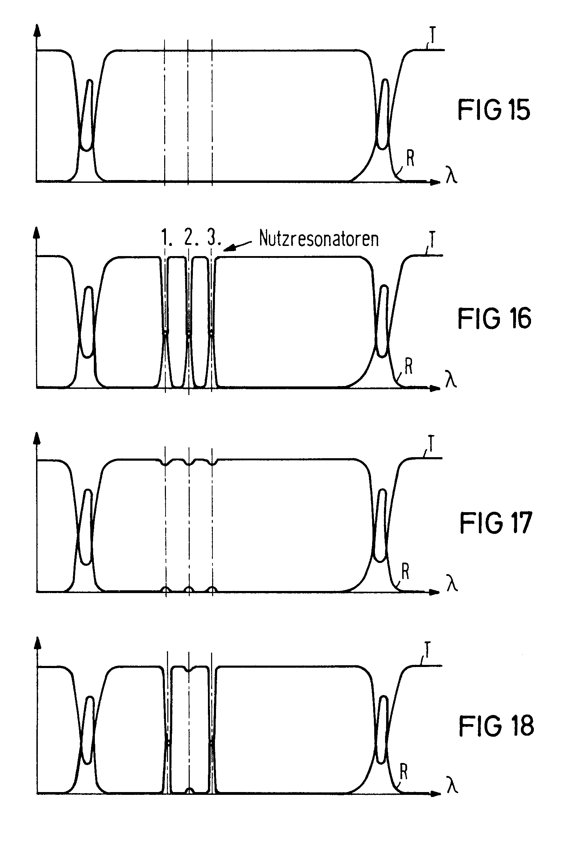

Der Übergang von Figur 15 nach Figur 16 zeigt auch den Einfluß veränderter Ankopplung dreier Nutzresonatoren auf die gesamte Transmission bzw. -reflektion.

Die dritte Form der Modulation, die Veränderung der Resonanzfrequenzen der Nutzresonatoren, verschiebt z.B. in Figur 16 die Nutzresonanzen gegenüber den Trägern.

Die erwähnte Änderung der Absorption in einem Nutzresonator ist besonders leicht zu realisieren. Wenn jeder Nutzresonator als Diode mit einem p-n-Übergang ausgestaltet ist, dann kann man durch Einstellung des Diodendurchlaßstroms bzw. der Sperrspannung die Anzahl der freien Ladungsträger im Nutzresonator steuern und damit die Höhe der Absorption festlegen. Die Injektion bzw. Absaugung von freien Ladungsträgern bewirkt auch eine Änderung des Brechungsindex und damit eine Änderung der optischen Weglänge. Welcher der beiden Effekte dominiert hängt vom verwendeten Material ab. Durch einen Gleichspannungsanteil der angelegten Diodenspannung läßt sich der Arbeitspunkt einstellen und damit gleichzeitig eine Abstimmung auf die gewünschte Resonanzwellenlänge vornehmen, während durch den überlagerten Wechselanteil des elektrischen Modulationssignals die Modulation erfolgt.

Im übrigen erzielt man auch eine Modulation, wenn man die entsprechenden Parameter der Nutzresonatoren 23 des weiter oben beschriebenen 1-N-Kopplers der Erfindung von Figur 9 variiert, da die Überkopplung in die Auskoppelwellenleiter 26 auch von diesen Parametern abhängt. In diesem Beispiel wird das Licht jedoch nur getrennt oder nur zusammengefaßt und moduliert.

Sind zwei Nutzresonatoren auf den gleichen Kanal, d.h. also die gleiche Wellenlänge abgestimmt, und vergleicht man die beiden Betriebszustände

    a) erster Nutzresonator hohe Absorption
        zweiter Nutzresonator geringe Absorption
    und im Gegensatz dazu
    b) erster Nutzresonator geringe Absorption
        zweiter Nutzresonator hohe Absorption

dann stellt man fest, daß der betreffende Kanal in beiden Betriebszuständen die gleiche Amplitude im Ausgangssignal aufweist. Da der optische Lichtweg in beiden Fällen unterschiedlich ist, hat sich aber die Phase des Ausgangssignals geändert. Man kann hier also erreichen, daß ausschließlich die Phase moduliert wird und dementsprechend von einem Gegentaktphasenmodulator sprechen.

Eine weitere Möglichkeit um einen ähnlichen Effekt zu erzielen, ist folgende: Man benützt einen 1-N-Koppler mit z.B. veränderlicher Absorption dazu, um einen Kanal wahlweise auf zwei verschiedene Ausgangswellenleiter zu schalten, die die Signale über unterschiedliche optische Wege in einen zweiten 1-N-Koppler führen, der die Signale wieder auf eine Leitung zusammenfaßt. Wieder hat das Ausgangssignal gleiche Amplitude, aber eine unterschiedliche Phase, je nach dem, auf welchem Wellenleiter es den Weg zwischen den beiden 1-N-Kopplern zurückgelegt hat, bzw. je nach dem, in welchem Verhältnis sich die Lichtenergie auf die beiden Wellenleiter verteilt hat.

5.Die Resonatormatrix als Zwischenverstärker

Eine Resonatormatrix, die als Zwischenverstärker verwendet wird, hat z.B. die Gestalt von Figur 10, 11 oder 12. Die Nutzresonatoren 23 sind in dieser Anwendung jedoch als Laser ausgebildet, die nicht die Schwingbedingung von Lasern erfüllen, d.h. die im Betrieb zwar invertiertes Halbleitermaterial enthalten, die aber ohne zusätzliche Beeinflussung von außen kein Laserlicht ausstrahlen. Erst wenn Licht von außen eingestrahlt wird, wird durch induzierte Emission die eingestrahlte Welle verstärkt.

Für die Nutzresonatoren 23 einer Resonatormatrix dieser Anwendung braucht man einen direkten Halbleiter. An dieser Stelle wollen wir darauf hinweisen, daß aus indirekten Halbleitern direkte Halbleiter werden können, wenn man sogenannte "Übergitter" herstellt, wenn also z.B. Schichten von Germanium und Silizium, deren Dicke im atomaren Bereich liegt, in einem Einkristall periodisch aufeinanderfolgen, Literaturangabe /3/.

Gegenüber einem linearen Verstärker, gemeinsam für alle Kanäle, der natürlich viel einfacher aufgebaut ist, hätte diese Anordnung den Vorteil, daß verschiedene Wellenlängen örtlich in verschiedenen Gebieten der Anordnung verstärkt werden, d.h. eine gegenseitige Beeinflussung der Verstärkung verschiedener Wellenlängen ist weit weniger möglich. Auch diese Resonatormatrix kann man zur Modulation von optischen Kanälen benutzen, indem man die Injektionsströme in die verschiedenen Nutzresonatoren und damit die Verstärkung der einzelnen Nutzresonatoren in Abhängigkeit von elektrischen Modulationssignalen steuert.

Diese Anordnung ermöglicht auch die Verstärkung von in Teilen modulierter Frequenzbänder, deren Gesamtheit breiter ist als die Verstärkungsbandbreite eines Laserverstärkers, da die einzelnen Frequenzbänder örtlich getrennt in verschiedenen Teilen der Matrixanordnung, die verschiedenes Lasermaterial mit unterschiedlichen Verstärkungsbändern enthalten können, verstärkt werden. Dieses unterschiedliche Material kann z.B. realisiert werden durch $Si_x Ge_{1-x}$ Übergitter mit verschiedener Übergitterstruktur.

Die Funktionsweise der bisher angeführten Beispiele von Resonatormatrizen beruht darauf, daß der einzelne Nutzresonator nur an die benachbarten Koppelresonatoren angekoppelt ist, an die anderen Koppelresonatoren aber möglichst gering oder nicht angekoppelt ist. Die dritte Ebene bei dem 1-N-Koppler von Figur 9 besteht nicht aus schmalbandigen Nutzresonatoren 23, sondern die Wellenleiter dieser Ebene dienen vielmehr als Auskoppelwellenleiter 26. Man kann die bisherigen Beispiele deshalb als einkreisige Filter ansprechen.

Die Filterwirkung, dies sei hier ausdrücklich betont, beruht bei einer Resonatormatrix grundsätzlich auf der Struktur der Resonatoranordnung, also auf der beschriebenen Art und Weise der optischen Kopplung der einzelnen Resonatoren. Die Filterwirkung beruht also nicht auf der Wirkungsweise von elektrischen oder elektronischen Filterschaltkreisen. Filter und Filterübertragungsfunktionen können natürlich auf sehr viele verschiedene Arten realisiert werden, z.B. durch die eben erwähnten elektrischen/elektronischen Filter. Gegenstand dieser Erfindung ist jedoch eine Anordnung von optischen Resonatoren für die Realisation optischer Filter. Die elektrischen Signale die aus den Resonatormatrizen gewonnen werden, können evtl. zusätzlich mit Hilfe von elektrischen/elektronischen Filterschaltkreisen weiterverarbeitet werden, dies geschieht aber nach dem Stand der Technik und ist nur insofern Gegenstand der Patentanmeldung, als die elektrischen/elektronischen Filterschaltkreise mit der Resonatormatrix auf ein Halbleitersubstrat integriert werden können.

Man kann die Nebensprechdämpfung zwischen zwei Kanälen durch eine Resonatormatrix 52O in Figur 19 erheblich verbessern, indem man an den jeweiligen Nutzresonator 231 einen zweiten Nutzresonator 232 der gleichen Resonanzwellenlänge ankoppelt und das Signal dieses zweiten Nutzresonators 232 für die Beeinflussung des Lichts, also z.B. die Absorption nützt. Man kann dann von zweikreisigen Filtern oder bei sinngemäß erweiterter Anordnung von mehrkreisigen Filtern sprechen.

Ein Empfänger/Demodulator hätte dann die Gestalt von Figur 19. Die Fotodioden dürfen nur das Licht in der zweiten Ebene der Nutzresonatoren 232 detektieren.

Ein mehrkreisiger Zwischenverstärker hätte z.B. ebenfalls die Form von Figur 19, die Absorptions-Fotodioden sind dann jedoch durch optisch aktive Materialien zu ersetzen.

Ein 1-N-Koppler hätte z.B. in zweikreisiger Ausführung die Gestalt 62O von Figur 2O. Wie bei der Resonatormatrix als Verzweiger oder als Kollektor kann zur Auskopplung auch hier entsprechend an den Nutzresonatoren 232 direkt angekoppelt verden, bei leichter Verringerung der Reflektivität der Spiegel dieser Nutzresonatoren.

Ein mehrkreisiger Modulator 720 gemäß Figur 21 bräuchte zusätzlich zur ersten Ebene von Koppelresonator 221 eine weitere Ebene von Koppelresonatoren 222 als Sammelebene für das Licht. Ein weiterer möglicher Aufbau für einen zweikreisigen Modulator enthält erstens einen zweikreisigen 1-N-Koppler z.B. die Anordnung 620 von Figur 20. Die erste Resonatormatrix wirkt als Verzweiger, die zweite Resonatormatrix als Kollektor, wobei beide durch die Wellenleiter 26 verbunden sind. Die Steuerung der Parameter einer Nutzresonatorebene des Verzweigers kann in dieser kombinierten Anordnung bei der Modulation der einzelnen Kanäle genutzt werden.

Die in z.B. Fig.20 über- oder untereinander liegenden Nutzresonatoren 231, 232 bilden Nutzresonatorgruppen, die untereinander nicht oder wenigstens möglichst gering gekoppelt sind und in diesem Beispiel zwei Nutzresonatoren enthalten. Man kann den Begriff der Nutzresonatorgruppe verallgemeinern und auch den einzelnen Nutzresonator 23 z.B. in Fig. 2, der mit den anderen Nutzresonatoren nicht oder möglichst nicht gekoppelt ist, als eine Nutzresonatorgruppe bezeichnen, die nur ein Element enthält.

Als Grundmaterial für die Resonatormatrix bieten sich Halbleitermaterialien an, die es erlauben, die in den verschiedenen Anwendungen geforderten p-n-Übergänge in der Resonatormatrix zu realisieren und auf das gleiche Halbleiterchip ergänzende Elektronik zu integrieren, z.B. eine elektronische Regeneratorschaltung für die empfangenen Signale. Es kann sinnvoll sein, auf das gleiche Halbleitersubstrat eine zweite Resonatormatrix zu integrieren, die optisch unabhängig von der ersten Resonatormatrix arbeitet. Z.B. kann beim Regenerator auf ein Substrat erstens der Empfänger/Demodulator der Erfindung, zweitens die elektronische Regeneratorschaltung einschließlich Taktrückgewinnung und drittens der Modulator für die verstärkten, aber noch unmodulierten Träger integriert werden. Selbstverständlich können auf ein Substrat mehrere Resonatormatrizen integriert sein, die entweder optisch unabhängig sind, z.B. für mehrere unabhängige Trägersysteme, oder optisch hintereinander angeordnet sind, z.B. ein mehrkreisiger 1-N-Koppler der Erfindung zum gleichzeitigen Trennen und Modulieren der Kanäle und ein anschliessender 1-N-Koppler der Erfindung zum Zusammenfügen der Kanäle.

Ein weiteres sehr wichtiges Beispiel für ergänzende Elektronik ist eine elektronische Vermittlerschaltung, die auf das gleiche Halbleitersubstrat wie die Empfänger/Demodulator-Resonatormatrix integriert sein kann. Figur 22 gibt eine derartige Anordnung im Prinzip wieder. Die modulierten Träger und je nach Demodulationsverfahren auch die verstärkten unmodulierten Träger werden der elektro-optischen Halbleiterschaltung über eine Glasfaser 16 zugeführt. In der Empfänger/Demodulator-Resonatormatrix, z.B. einer Matrix 12O, werden die optischen Signale wellenlängenselektiv getrennt und in elektrische Signale umgewandelt. Mit Hilfe der mitintegrierten elektronischen Vermittlerschaltung 82 können diese Signale nun wahlweise auf verschiedene elektrische Ausgangsleitungen 83 gelegt werden. Diese Ausgangsleitungen können nun gebündelt oder einzeln verschiedenen Endempfängern zugeführt werden oder weiteren Schaltkreisen bzw. Resonatormatrizen, die die elektrischen Signale wieder in optische Signale umwandeln, und die auf das gleiche Substrat integriert sein können. Durch die letztgenannte Möglichkeit ist es möglich, die Informationen der Kanäle eines Trägersystems beliebig auf andere Kanäle weiterer Trägersysteme zu verteilen. Wenn in Figur 23 die ankommenden Glasfaserleitungen 161 und 162 z.B. je 1O Kanäle aufweisen, kann die Information jedes einzelnen Kanals wahlweise auf die Glasfaserleitungen 163, 164 oder 165 mit z.B. auch je 1O Kanälen vermittelt werden.

Im übrigen ist auch eine optische Vermittlung der Kanäle möglich. Z.B. kann man eine Resonatorstruktur 82O nach Figur 24 verwenden. Diese enthält neben einer ersten Ebene mit Koppelresonatoren 221 eine zweite Ebene mit Koppelresonatoren 222. Die ersten Koppelresonatoren 221 haben wieder die Aufgabe die Energie zu verteilen, die zweiten Koppelresonatoren 222 haben hier die Aufgabe, die Energie zu sammeln und über den Auskoppelwellenleiter 26 abzuführen. Die Nutzresonatoren 23 haben die Aufgabe mittels der gleichen Parameteränderung, wie sie bei der Modulation beschrieben wurden, wahlweise Kanäle wellenlängenselektiv von den ersten Koppelresonatoren 221 zu den zweiten Koppelresonatoren 222 überzukoppeln. Eine mögliche Vermittlerschaltung mit diesen Elementen 82O gibt Figur 25 wieder.

Als ein typisches Beispiel für die geometrischen Größen einer Resonatormatrix kann man z.B. folgende Werte annehmen: Für die Resonatoren wählt man quadratische oder nahezu quadratische Wellenleiter der Seitenlänge von ca. 1$\mu$m bei einem Brechzahlsprung von n = O,24. Die typische Länge der Resonatoren liegt ohne Spiegelschichten zwischen 5O und 15O $\mu$m. Die Abstände, siehe z.B. Figur 19, von einem Koppelresonator 22 zu einem benachbartem Koppelresonator 22 und von einem Koppelresonator 22 zu einem ersten Nutzresonator 231 und von einem ersten Nutzresonator 231 zu einem zweiten Nutzresonator 232 werden in diesem Beispiel so gewählt, daß sich die jeweiligen Kopplungen z.B. verhalten wie 1:0,033:0,003. Da die Kopplungen aber mit größer werdendem Abstand von Resonator zu Resonator exponentiell abnehmen, verhalten sich die Abstände in diesem Beispiel wie 1: 5,3 : 8,3. Alle Figuren in dieser Beschreibung, die Strukturbeispiele für Resonatormatrizen widergeben, sind nicht maßstabsgerecht gezeichnet. Insbesondere sind die Abstände der Resonatoren ähnlich wie in obigem Beispiel nicht ihrem Verhältnis entsprechend skizziert, und in den meisten Beispielen sind auch elektrische Zuleitungen und benötigte p-n-Übergänge nicht gezeichnet. Hierzu werden in den folgenden Abschnitten einige Beispiele genannt, die sich sinngemäß auf alle Resonatorstrukturen übertragen lassen, die p-n-Übergänge für ihre Funktion benötigen.

Die Figuren mit Strukturbeispielen für Resonatormatrizen geben die Struktur beispielhaft wider Auch dort, wo es nicht ausdrücklich erwähnt wird, kann eine Erweiterung auf drei oder mehr Ebenen sinngemäß erfolgen, ebenso wie die Zahl der nebeneinander liegenden Resonatoren verändert, insbesondere erhöht werden kann. Die Lage des Ein- und/oder Auskoppelwellenleiters in einer Koppelresonatorebene ist auch nur beispielhaft. Die Funktion einer Resonatormatrix bleibt auch dann erhalten, wenn man in den Beispielen "oben" und "unten" vertauscht und/oder die Gesamtanordnung um einen Winkel z.B. von 90 Grad dreht.

Die Resonatormatrizen, die keine p-n-Übergänge für ihre Funktion benötigen, d.h. z.B. die 1-N-Koppler der Erfindung, können auch auf glasartigen Substraten realisiert werden.

Nach den Beispielen für die Struktur von Resonatormatrizen soll nun die Herstellung einer Resonatorstruktur in mehreren Ebenen am Beispiel eines Demodulators und am Beispiel der Materialkombination Silizium und Germanium beschrieben werden. Diese Materialkombination hätte auch den Vorteil, daß auf ein Silizium-Substrat eine oder mehrere Resonatormatrizen,andere elektro-optische Einrichtungen und/oder ergänzende Elektronik integriert werden können. Dies könnte z.B. dadurch geschehen, daß die Resonatormatrix oder -matrizen mit den zugehörigen Spiegeln als letzter Schritt einer integrierten Schaltung hergestellt werden, indem geeignet dotierte Si und $Si_x Ge_{1-x}$ Schichten auf eine in üblicher Weise, d.h. z.B. mit "heißer" Diffusion bei 1.1OO° C hergestellte Schaltung mit "kalter" Epitaxie, d.h. z.B. mit MBE bei ca. 6OO° C aufgebracht werden.

Zunächst sollen jedoch einige Materialdaten angegeben werden, n = Brechungsindex
Grundmaterial:
Si: $n_{Si} \approx$ 3.6 - 3.4 1$\mu$m<$\lambda$< 2$\mu$m Ge: $n_{Ge} \approx$ 5 - 4.2 1$\mu$m<$\lambda$< 2$\mu$m

Wellenleiter:

$Si_x Ge_{1-x}$: $n_{Ge} > n_\lambda > n_{Si}$

Spiegelschichten:

$SiO_2$: $n \approx 1.6 - 1.4$

Eine Mischung $Si_x Ge_{1-x}$ ($O \leq x \leq 1$) hat die Eigenschaft, daß der Bandabstand und der Brechungsindex des Gemisches Werte zwischen den entsprechenden Werten der reinen Materialien Si und Ge annehmen. Der Brechungsindex des Gemisches ist größer als bei reinem Si und der Verlauf des Absorptionskoeffizienten in Abhängigkeit von der Wellenlänge im Bereich der Bandkante wird zu größeren Wellenlängen verschoben, wobei der prinzipielle Verlauf über der Wellenlänge erhalten bleibt, d.h. es findet eine Parallelverschiebung der Absorptionskurve zu größeren Wellenlängen statt, siehe Literaturangabe [4] [5] [6] [7].

Das Gemisch $Si_{O,7} Ge_{O,3}$ hat z.B. in der Umgebung von $2 = 1.3$ $\mu m$ die gleichen Absorptionseigenschaften wie reines Si in der Umgebung von $\lambda = 1.1$ $\mu m$, und der Brechungsindex ist bei $\lambda = 1.3$ $\mu m$ um $\Delta n \approx O,24$ gegenüber von reinem Si erhöht.

Die Wahl des Mischungsverhältnisses x gestattet es also, die Absorption in Abhängigkeit von der Wellenlänge einzustellen. Gleichzeitig entsteht je nach Ge-Anteil ein mehr oder weniger gut führender Wellenleiter.

Die Herstellung des $Si_x Ge_{1-x}$ Gemisches als Einkristall erfolgt z.B. durch Molekularstrahlepitaxie, eng.: Molecular-Beam-Epitaxy = MBE, Literaturangabe /8/.

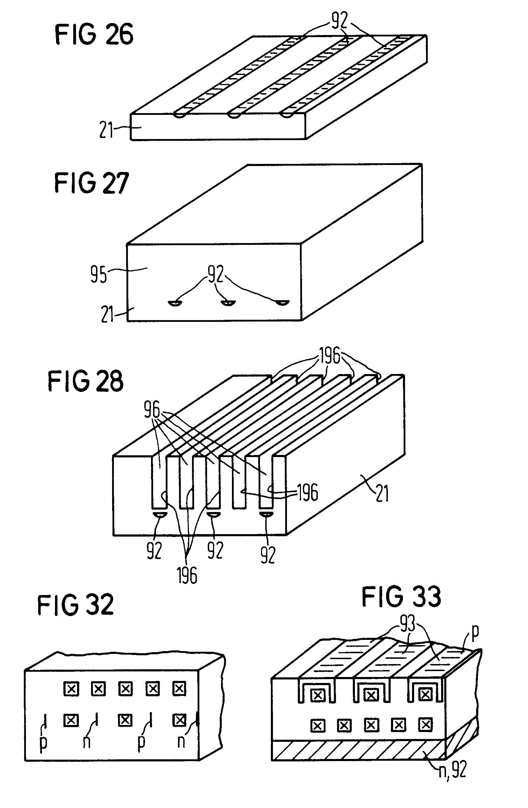

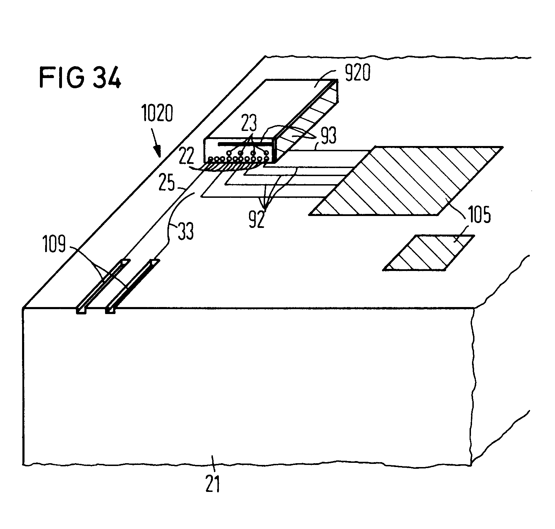

Die Herstellung der Resonatorstruktur erfolgt dann z.B. in folgenden Schritten 1 bis 8 siehe Fig. 26-31, deren Ergebnis eine auf einem Substrat 21 "aufgesetzte" Resonatormatrix 920 ist, wie z.B. in Figur 34 skizziert. In den Figuren 26 bis 31 zu den Herstellungsschritten 1 bis 8 ist wie in allen Strukturbeispielen für Resonatormatrizen nur ein kleiner Ausschnitt des Substrats 21 gezeichnet. Bevor mit der Herstellung der Resonatormatrix 92O begonnen wird, kann das Substrat schon wie in Figur 34 eingezeichnet, einen oder mehrere Bereiche 1O5 mit integrierter Elektronik enthalten und/oder optische Elemente wie z.B. einen außerhalb einer Resonatorebene gelegenen Einkoppelwellenleiter 25 und einen Koppler 33 für das Hinzufügen von unmodulierten Trägern bei Heterodyn- oder Homodyndemodulation. Das Ein- oder Auskoppeln von Licht in der Wellenlänge der optischen Nachrichtentechnik in oder aus dem/den optischen oder elektro-optischen Baustein 1O2O der integrierten Optik erfolgt nach dem Stand der Technik z.B. mit Prismen-Kopplern oder z.B.mit Führungsnuten 1O9 für Glasfasern, die auf integrierte Wellenleiter, z.B. 25, stoßen. Auf das gleiche Bauelement 1.O2O können ein oder mehrere zusätzliche Resonatormatrizen in parallelen Arbeitsschritten integriert werden.

1. "Untere" Kontakte 92 der Dioden herstellen, z.B. durch p Dotieren des Substrats 21 wie in Figur 26.

2. Mehrere $\mu m$-dicke Schicht 95 von eigenleitendem Si mittels MBE auftragen wie in Figur 27.

3. Ätzen von "Schächten" 96, Fig. 28, mittels Si-Vorzugsätzen, Literaturangabe/9/, /1O/, wobei evtl. zur Einstellung der gewünschten Resonanzwellenlängen der später in diesen Schächten gebildeten Resonatoren die Schächte verschieden breit vorgesehen werden können. Bei Wahl der "richtigen" Kristallebenen als Ätzebenen garantiert das Si-Vorzugsätzen sehr glatte Ätzflächen, die später die seitliche Begrenzung von Wellenleitern 196 bilden. Dadurch werden Streuverluste in Wellenleitern auf ein Minimum reduziert.

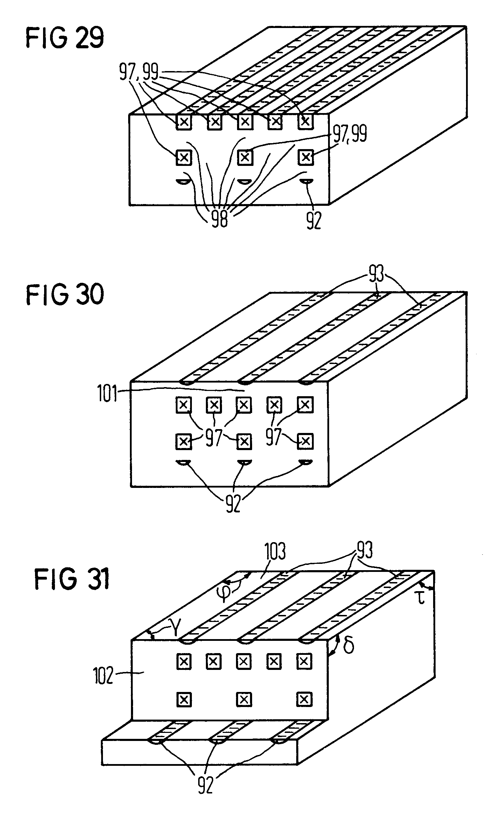

4. Füllen der "Schächte" 96 mittels MBE gemäß Fig. 29 wechselweise mit reinem Si 98 und $Si_x Ge_{1-x}$ 99 für Wellenleiter 97, wobei evtl. zur Einstellung der gewünschten Resonanzwellenlängen in den Resonatoren die Höhe der durch $Si_x Ge_{1-x}$ 99 gebildeten Wellenleiter 97 verschieden groß gewählt wird. Die geometrischen Abstände der Wellenleiterschichten müssen dabei so bemessen sein, daß die geforderten starken, schwachen und möglichst geringen Kopplungen entstehen.

5. Gemäß Fig. 3O Deckschicht 1O1 aus reinem Si und obere Kontakte 93, in diesem Beispiel n-leitend, aufbringen.

6. Gemäß Fig. 31 Abschneiden auf richtige Länge und gewünschte Breite, zum Beispiel durch anisotropes oder mechanisches Bearbeiten, wobei eventuell die Winkel $\gamma$ bzw. $\phi$ bzw. $\delta$ bzw. $\tau$ nicht 9Oº sein können, um durch die dadurch bedingte Schräge der Reflektorflächen eine Einstellung der Resonatoren auf die gewünschten Resonanzwellenlängen-Abstände zu bewirken.

7. Spiegelschichten auf Endflächen 1O2 und 1O3 aufbringen, z.B. wechselweise $SiO_2$ und Si. Diese beiden Materialien weisen einen großen Brechzahlsprung auf. Möglich sind jedoch auch alle anderen aus optischen Anwendungen bekannten Materialien. Herstellungsgemäß von Vorteil ist, daß die Verspiegelung einer Seite die Verspiegelung aller Resonatoren dieser Seite bilden kann. Nur einzelne Wellenleiter sollten von der Verspiegelung ausgespart bleiben wegen Aus- und/oder Einkoppelung von Licht. Eine weitere Möglichkeit der Spiegelherstellung besteht auch darin, Spiegelschichten durch Vorzugsätzen = anisotropes Ätzen zunächst als "Schächte" zu realisieren, die in weiteren Arbeitsgängen mit einem geeigneten Material z.B. $SiO_2$ aufgefüllt werden. Anstelle von gemeinsam auf den Endflächen aufgebrachten Reflektoren können auch in die einzelnen Wellenleiter, welche die Resonatoren bilden, eingebaute aus der optischen Nachrichtentechnik bekannte Grating-Reflektoren oder Grating-ähnliche Strukturen verwendet werden. Unter letzteren verstehen wir Zwischenformen zwischen dielektrischen Spiegeln und Grating-Reflektoren.

8. Falls die herzustellende Resonatormatrix ein-/oder Auskoppelwellenleiter enthält, die außerhalb der Substratebene, die z.B. den Wellenleiter 25 enthält, liegen, können Teile des Substrats 11O nach der Spiegelherstellung für die Nutz- und Koppelresonatoren wie in Fig. 35 z.B. durch MBE wieder erhöht werden, um diese ein- und/oder Auskoppelwellenleiter aufzunehmen.

Die Schritte 1 bis 8 zählen nur die grundlegenden Herstellungsschritte auf. Die praktische Durchführung erfordert technologische Zwischenschritte wie das Aufbringen von fotographischen Schichten, Ätzstoppschichten usw.

Denkbare Modifikationen der Herstellung oder der Struktur sind:

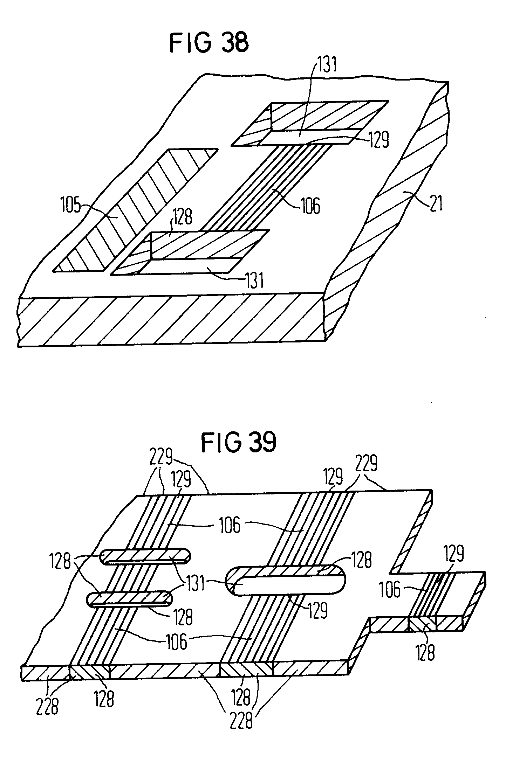

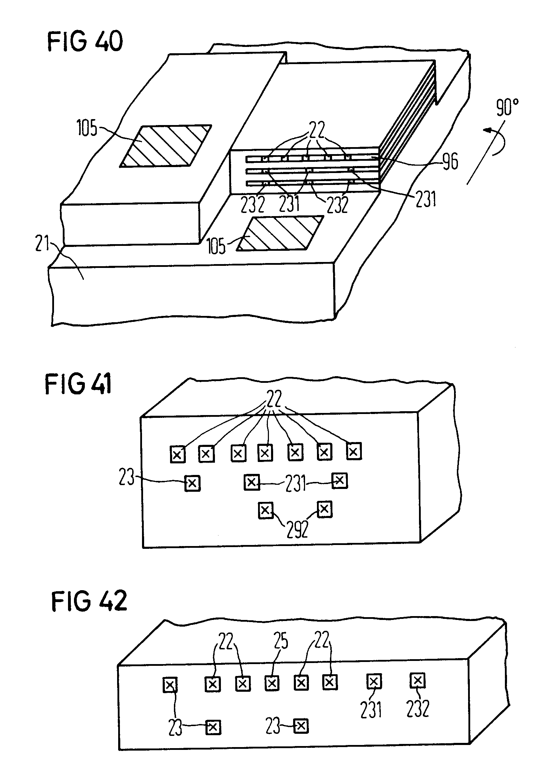

- Man kann in Si dünne Folien oder auch zungenförmige Strukturen herstellen, Literaturangabe/11/. Dies würde in der obigen Schrittfolge Schritt 2 erübrigen, da die unteren Kontakte 92 auf die Unterseite einer Folie oder Zunge aufgebracht werden können. Anschließend müßte eine Folie allerdings mechanisch stabilisiert werden.
- In der Struktur von Fig. 31 könnten die unteren Kontakte 92 oder die oberen Kontakte 93 flächig und nicht leiterförmig ausgebildet sein.
- Zwei oder mehr verschiedene leiterförmige Kontakte 92 können elektrisch verbunden sein. Dies gilt auch für die Kontakte 93.
- Die Kontakte bzw. die p-n-Schichten 92 und 93 können wie in Fig. 32 zwischen den Nutzresonatoren ebenfalls in den Schächten angebracht werden. Dadurch könnte auf Schritt 1 und 2 und teilweise auf Schritt 5 verzichtet werden.
- Die Kontakte können wie in Fig. 33 u-förmig ausgebildet sein.
- Die elektrische "Verbindung" von flächenförmig ausgebildeten Kontakten 93 zur Ebene, die die unteren Kontakte 92 und evtl. integrierte Elektronik 1O5 enthält, kann z.B., wie in Fig. 34 gezeichnet, durch das Auffüllen eines geätzten "Schachtes" mit n-leitendem Material erfolgen.
- Das Aufwachsen von Material und das Ätzen und Füllen der Schächte der Arbeitsschritte 2, 3 und 4, kann in mehreren aufeinanderfolgenden Schritten Ebene für Ebene vorgenommen werden. Damit wird das Ätzen und Füllen von zu tiefen Schächten vermieden.
- Auf das Substrat 21 kann alternativ zu Herstellungsschritt 2 nicht nur eigenleitendes Si, sondern mehrere aufeinanderfolgend Schichten Si, $Si_xGe_{1-x}$ aufgewachsen werden, wie in Fig. 36. Anschließend können wieder Schächte in diese Struktur geätzt werden, wie in Fig. 37. Anschließend werden diese Schächte mit Material mit geeignetem Brechungsindex aufgefüllt, das jetzt die Gebiete zwischen den Wellenleiterkerngebieten bildet und nicht unbedingt einkristallin sein muß. Auch dieses Aufwachsen von Material und Ätzen und Füllen der Schächte kann in mehreren Schritten erfolgen. Jeder dieser Schritte umfaßt dann nur eine Ebene oder nur wenige Ebenen der herzustellenden Resonatormatrix.
- Der "Block" der Resonatormatrix 920 in Fig.34 muß nicht auf allen Seiten frei geätzt werden. Im Grunde müssen nur die Endflächen 102 und 103 für eine Verspiegelung frei gelegt werden.
- In eine Substratscheibe 21, die entweder nur reines Si mit dem Querschnitt von Fig. 27 oder eine Schichtstruktur mit dem Querschnitt von Fig. 36 enthält, können wie in Fig. 38 in "Löcher" 131 geätzt werden, die zwei gegenüberliegende Flächen 128 und 129 aufweisen, welche zwei zueinander nahezu parallele oder in einem definierten Winkel zueinander stehende plane Flächen bilden. Diese Flächen bilden die Vorder- und Rückseite 102 und 103 einer späteren Resonatormatrix und werden durch das Aufbringen von Reflektorschichten verspiegelt. Wenn die geätzten "Löcher" 131 groß genug sind, stören auch abgerundete Ecken wie sie in einem isotropen Ätzprozeß entstehen, vgl. Fig. 39, nicht, da man dann nur die Teilflächen von 128 und 129 für die Resonatormatrix nützt, die eben oder nahezu eben sind. Die erste Spiegelschicht, die auf die Flächen 128 und 129 aufgebracht wird, ist bevorzugt aus einem Material, das durch anisotropes Ätzen nicht angegriffen wird. Nach der Verspiegelung können im Zwischengebiet 106 Schächte geätzt und nach den genannten Herstellungsvarianten gefüllt werden.
- Für eine der Spiegelflächen einer Resonatormatrix können Außenflächen 228 und 229 genutzt werden. Auf diese Weise lassen sich auf einfache Weise auf ein Substrat mehrere Resonatormatrizen in die verschiedenen Gebiete 106 integrieren, siehe z. B. Fig.39.
- Das Ätzen der Schächte und analog die anderen Herstellungsschritte erfolgten in den bisherigen Beispielen senkrecht zu den verschieden Resonatorebenen. Die genannten Herstellungsschritte können auch im um 90° gedrehten Substrat nach Figur 40 parallel zu den Resonatorebenen erfolgen.

Mit entsprechenden Herstellungsschritten können auch alle anderen Matrixstrukturen insbesondere solche mit mehreren Resonatorebenen hergestellt werden. Insbesondere ist darauf hinzuweisen, daß die Fülle der bekannten Verfahren der Halbleitertechnologie natürlich nach Wahl zur Herstellung der erfindungsgemäßen Gegenstände verwendet werden können, ohne daß hierbei noch wesentliche erfinderische Aktivitäten nötig wären.

Im Gegensatz zu allen anderen gezeichneten Beispielen für Resonatormatrizen, in denen die Resonatoren genau über oder untereinander liegen, können die Nutzresonatoren 23 und 231 nach Fig.41 auch versetzt zwischen Koppelresonatoren 22 angeordnet sein und/oder können zwei schwach gekoppelte Nutzresonatoren 231 und 232 zweier Nachbarebenen, versetzt angeordnet sein. Eine Koppelresonatorebene nach Fig. 42, die definiert ist durch die Resonatoren 22, kann an einem und/oder anderen Ende der Ebene Nutzresonatorenen 23, 231, 232 enthalten.

Weitere optische Elemente, wie z.B. zusätzliche Wellenleiter oder Resonatoren, die auf das gleiche Substrat wie eine Resonatormatrix integriert werden können, die aber die Wirkungsweise der Resonatoren der Resonatormatrix nicht beeinflussen, können beliebig auf dem Substrat angeordnet werden.

Die geometrische Form der Integration der unter den Bezeichnungen Koppelresonatoren oder Nutzresonatoren zu Gruppen zusammengefaßten optischen Resonatoren ist nicht auf die Anordnung in Ebenen beschränkt. Zur Bedeutung des Wortes Ebene soll deshalb abschließend noch eine Bemerkung gemacht werden. Dieser Begriff diente im vorangegangenen nur dazu, einen topologischen Zusammenhang zu beschreiben. Es bestehen keine prinzipiellen Schwierigkeiten, sehr von der Ebene als geometrische Figur abzuweichen. Wie im Vorangegangenen geschildert, kommt es von der Funktion her nur auf die Größe der Kopplung zwischen im wesentlichen parallelen und vorzugsweise lateraleimodigen Wellenleiter-Resonatoren an. Diese Kopplungen bilden den erfindungsgemäßen Zusammenhang zwischen den Resonatoren, der geometrisch auf vielfältige Weise, technisch unter Umständen bevorzugt mit Anordnungen in Ebenen realisiert werden kann.

Literatur

(1) M. Börner; Vorträge 6. Internationaler Kongress LASER 83, S. 425, "Optoelektronik in der Technik", W. Waidlich, Springer Verlag

(2) Serge Luryi, Alexander Kastalsky, John C. Bean, New Infrared Detector on a Silicon Chip, IEEE TRANSACTIONS on ELECTRON DEVICES, ED-31, 1984, S. 1135

(3) Deutsche Patentanmeldung: P 21 39 436.5-33

(4) Landolt Börnstein, II, 6, S. 375

(5) Landolt Börnstein, I, 4, S. 889

(6) Landolt Börnstein, Neue Serie, III, 17a, S. 449

(7) Landolt Börnstein, I. 8, Bild 28 22 12

(8) E. Kasper a. K. Wörner, Application of Si - MBE for Integrated Circuits, Proc. 2nd Int. Symp. VL$^{SI}$ Science a. Technology, Chincinatti, 1984, S. 429

(9) K. E. PETERSEN, Silicon as a Mechanical Material, Proceedings of the IEEE, Vol. 7O, No. 5, 1982, S. 42O

(1O) N. Tsamita et altera, Fabrication of X-ray masks using anisotropic etching of (11O) Si and shadowing techniques, J. Vac. Sci, Technol. 19 (4), 1981, S. 1211

(11) BMFT - Forschungsbericht T 83-O89

(12) H. Dammann, H. Schmitt, G. Schmitz, Design a. analysis of a waveguide isolator with a formbirefringent top-layer. ECOC 84, S. 42

**Patentansprüche**

1. Anordnung von optischen Resonatoren zum wellenlängenselektiven Auftrennen mehrerer ankommender zusammengefaßter Kanäle verschiedener Wellenlänge und/oder Zusammenfassen mehrerer ankommender getrennter Kanäle verschiedener Wellenlänge, wobei die Resonatoren (22, 23, 221, 222, 231, 232) aus auf einem Substrat integrierten, optischen gekoppelten dielektrischen Wellenleitern bestehen, welche an einander gegenüberliegenden Enden mit Reflektoren hohen Reflexionsfaktors nahe dem Wert eins verspiegelt sind, und wobei die Längsausdehnung jedes Resonators (22, 23, 221, 222, 231, 232) zwischen den Reflektoren groß gegen die dazu senkrechten Querausdehnungen dieses Resonators ist, **dadurch gekennzeichnet,** daß alle optischen Resonatoren (22, 23, 221, 222, 231, 232) auf dem Substrat derart in einer matrixförmigen Anordnung (20, 120, 220, 520, 620, 720) integriert sind, daß die Resonatoren (22, 23, 221, 222, 231, 232) in Richtung ihrer Längsausdehnung parallel zueinander ausgerichtet und seitlich in Richtung senkrecht zu ihrer Längsausdehnung optisch gekoppelt sind, daß die Resonatoren (22, 23, 221, 222, 231, 232) Koppelresonatoren (22, 221, 222), die untereinander stark seitlich gekoppelt sind, und Nutzresonatoren (23, 231, 232), zwischen denen eine höchstens schwache seitliche Kopplung im Vergleich zur starken seitlichen Kopplung der Koppelresonatoren (22, 221, 222) besteht, aufweisen,

daß jeder Nutzresonator (23, 231, 232) im Vergleich zur starken seitlichen Kopplung der Koppelresonatoren (22, 221, 222) schwach seitlich an einen zugeordneten Koppelresonator (22, 221, 222) gekoppelt ist,

daß ein in seiner Längsausdehnung zu den Koppelresonatoren (22, 221, 222) parallel ausgerichteter und seitlich in Richtung senkrecht zu seiner Längsausdehnung an wenigstens einen Koppelresonator (22, 221, 222) stark gekoppelter optischer Einkoppelwellenleiter (25, 27) zum Einkoppeln der ankommenden zusammengefaßten und zutrennenden Kanäle in die matrixförmige Anordnung (20, 120, 220, 520, 620, 720) und/oder in seiner Längsausdehnung zu den Koppelresonatoren (22, 221, 222) parallel ausgerichteter und seitlich in Richtung senkrecht zu seiner Längsausdehnung an wenigstens einen Koppelresonator (22, 221, 222) stark gekoppelter Auskoppelwellenleiter (26, 27) zum Auskoppeln der ankommenden getrennten und zusammenzufassenden Kanäle aus der matrixförmigen Anordnung (20,120, 220, 520, 620, 720) vorgesehen ist,

wobei die starke Kopplung zwischen den Koppelwellenleitern (22, 221, 222) und die starke Kopplung des Einkoppelwellenleiters (25, 27) und/oder des Auskoppelwellenleiters (26, 27) an wenigstens einen Koppelwellenleiter (22, 221, 222) derart gewählt ist, daß zwischen diesen Wellenleitern und Koppelresonatoren alle Kanäle in ihrer gesamten Bandbreite überkoppeln, und

wobei die schwache Kopplung zwischen den Nutzresonatoren (23, 231, 232) und zwischen jedem Nutzresonator (23, 231, 232) und dem diesem zugeordneten Koppelresonator (22, 221, 222) derart gering gewählt ist, daß eine resonanzmäßige Überkopplung zwischen diesem Nutzresonator (23, 231, 232) und dem zugeordneten Koppelresonator (22, 221, 222) nur bei der Wellenlänge eines diesem Nutzresonator (23, 231, 232) eindeutig zugeordneten Kanals in der gesamten Bandbreite dieses einen Kanals erfolgt, wobei dieser Nutzresonator (23, 231, 232) auf eine optische Länge zwischen seinen Reflektoren eingestellt ist, bei der die Wellenlänge des diesem Nutzresonator (23, 231, 232) zugeordneten Kanals eine Resonanzwellenlänge dieses Nutzresonators (23, 231, 232) ist.

2. Anordnung von optischen Resonatoren nach Anspruch 1, **dadurch gekennzeichnet,** daß Koppelresonatoren (22, 221, 222) in einer Ebene und Nutzresonatoren (23, 231, 232) in einer zur Ebene der Koppelresonatoren (22, 221, 222) parallelen Ebene angeordnet sind.

3. Anordnung von optischen Resonatoren nach Anspruch 2, **dadurch gekennzeichnet,** daß in der Ebene der Koppelresonatoren (22, 221, 222) seitlich neben diesen stark gekoppelten Koppelresonatoren (22, 221, 222) Nutzresonatoren (23, 231, 232) angeordnet sind.

4. Anordnung von optischen Resonatoren nach einem der vorhergehenden Ansprüche, **dadurch gekennzeichnet,** daß die Kanäle über einen einzigen Ein- und Auskoppelwellenleiter (27) in die matrixförmige Anordnung (20, 120, 220, 520, 620, 720) ein- und aus dieser auskoppelbar sind.

5. Anordnung von optischen Resonatoren nach einem der vorhergehenden Ansprüche, **dadurch gekennzeichnet,** daß die Kanäle über einen einzigen Einkoppelwellenleiter (25) einkoppelbar und über mehrere untereinander höchstens schwach gekoppelte Auskoppelwellenleiter (26) wellenlängenselektiv auskoppelbar sind.

6. Anordnung von optischen Resonatoren nach einem der vorhergehenden Ansprüche, **dadurch gekennzeichnet,** daß die Kanäle über mehrere untereinander höchstens schwach gekoppelte Einkoppelwellenleiter (25) einkoppelbar und über einen einzigen Auskoppelwellenleiter (26) auskoppelbar sind.

7. Anordnung von optischen Resonatoren nach einem der vorhergehenden Ansprüche, **dadurch gekennzeichnet,** daß auf dem Substrat ein breitbandiger optischer Koppler integriert ist, mit dessen Hilfe in einen Einkoppelwellenleiter (25) ein zusätzliches Wellenlängenband einkoppelbar ist.

8. Anordnung von optischen Resonatoren nach einem der vorhergehenden Ansprüche, **dadurch gekennzeichnet,** daß in einer Ebene entweder nur Koppelresonatoren (22, 221, 222) oder nur Nutzresonatoren (23, 231, 232) angeordnet sind.

9. Anordnung von optischen Resonatoren nach einem der vorhergehenden Ansprüche, **dadurch gekennzeichnet,** daß das Substrat aus Halbleitermaterial besteht.

10. Anordnung von optischen Resonatoren nach einem der vorhergehenden Ansprüche, **dadurch gekennzeichnet,** daß das Substrat wenigstens zum Teil glasartig ist.

11. Anordnung von optischen Resonatoren nach einem der Ansprüche 1 bis 8 und Anspruch 9, **dadurch gekennzeichnet,** daß auf dem Substrat aus Halbleitermaterial eine elektronische Schaltung integriert ist.

12. Anordnung von optischen Resonatoren nach einem der vorhergehenden Ansprüche, **dadurch gekennzeichnet,** daß auf dem Substrat mehrere räumlich voneinander getrennte matrixförmige Anordnungen aus optischen Resonatoren integriert sind.

13. Anordnung von optischen Resonatoren nach einem der vorhergehenden Ansprüche, **dadurch gekennzeichnet,** daß wenigstens ein Nutzresonator (23, 231, 232) im Bereich eines p-n-Übergangs befindet und daß Schaltungsmittel vorgesehen sind, die es gestatten, die Eigenschaften dieses Nutzresonators im Verband der matrixförmigen Anordnung (20, 120, 220, 520, 620, 720) von optischen Resonatoren (22, 23, 221, 22, 231, 232) über den p-n-Übergang elektrisch zu verändern.

14. Anordnung von optischen Resonatoren nach einem der vorhergehenden Ansprüche, **dadurch gekennzeichnet,** daß wenigstens ein Nutzresonator (23, 231, 232) aus einem Material besteht, das keine oder nur eine geringe Absorption aufweist.

15. Anordnung von optischen Resonatoren nach einem der vorhergehenden Ansprüche, **dadurch gekennzeichnet,** daß mindestens ein Nutzresonator (23, 231, 232) aus einem Material mit einer Absorption besteht, wie sie für den Effekt einer Absorptionserhöhung in einem Resonator benötigt wird.

16. Anordnung von optischen Resonatoren nach einem der vorhergehenden Ansprüche, **dadurch gekennzeichnet,** daß wenigstens ein Nutzresonator (23, 231, 232) aus einem laserfähigen Material besteht.

17. Anordnung von optischen Resonatoren nach einem der vorhergehenden Ansprüche, **dadurch gekennzeichnet,** daß wenigstens ein Teil des Substrats im Bereich der matrixförmigen Anordnung von Resonatoren aus einem Material besteht, das den elektrooptischen Effekt zeigt.

18. Anordnung von optischen Resonatoren nach einem der vorhergehenden Ansprüche, **dadurch gekennzeichnet,** daß das Substrat aus Silizium besteht und das Material von optischen Wellenleitern und optischen Resonatoren aus einem Gemisch $Si_xGe_{1-x}$ mit erhöhtem Brechungsindex ist.

19. Anordnung von optischen Resonatoren nach einem der vorhergehenden Ansprüche, **dadurch gekennzeichnet,** daß Nutzresonatoren (23, 231, 232) zugeordnete Anschlußelektroden derart miteinander verbunden sind, daß elektrische Steuersignale für mehrere Resonatoren an einer gemeinsamen Elektrode anliegen.

20. Anordnung von optischen Resonatoren nach einem der vorhergehenden Ansprüche, **dadurch gekennzeichnet,** daß die Reflektoren (28, 29) der einzelnen Resonatoren (22, 23, 221, 222, 231, 232) jeweils an einem Ende der Resonatoren zu einem gemeinsamen Spiegel zusammengefaßt sind.

21. Anordnung von optischen Resonatoren nach einem der vorhergehenden Ansprüche, **dadurch gekennzeichnet,** daß die Resonatoren (22, 23, 221, 222, 231, 232) wenigstens an einem Ende Spiegel aufweisen, die von Spiegeln anderer Resonatoren getrennt sind.

22. Anordnung von optischen Resonatoren nach einem der vorhergehenden Ansprüche, **dadurch gekennzeichnet,** daß einander gegenüberstehende Reflektoren (28, 29) der Resonatoren zwei schräg zueinander angeordneten Reflektorflächen aufweisen.

23. Anordnung von optischen Resonatoren nach einem der vorhergehenden Ansprüche, **dadurch gekennzeichnet,** daß einander gegenüberstehende Reflektorflächen der Reflektoren (28, 29) der Resonatoren parallel zueinander sind.

24. Anordnung von optischen Resonatoren nach einem der vorhergehenden Ansprüche, **dadurch gekennzeichnet,** daß mindestens ein Resonator im Vergleich zu den anderen Resonatoren in Richtung einer seiner Querabmessungen eine andere Form des Brechzahlverlaufs aufweist.

25. Anordnung von optischen Resonatoren nach einem der vorhergehenden Ansprüche, **dadurch gekennzeichnet,** daß optische Wellenleiter und/oder Resonatoren seitlich durch Flächen (196) begrenzt sind, die durch ein Ätzen von Schächten in das Substrat hergestellt sind.

26. Anordnung von optischen Resonatoren nach einem der vorhergehenden Ansprüche, **dadurch gekennzeichnet,** daß optische Wellenleiter und/oder Resonatoren seitlich durch Flächen (196) begrenzt sind, die durch anisotropes Ätzen von Schächten in das Substrat hergestellt sind.

27. Anordnung von optischen Resonatoren nach einem der vorhergehenden Ansprüche, **durch gekennzeichnet,** daß ein Reflektor (28, 29) mehrere unterschiedlich brechende optische Schichten aufweist.

28. Anordnung von optischen Resonatoren nach einem der vorhergehenden Ansprüche, **dadurch gekennzeichnet,** daß mehrere unterschiedlich brechende optische Schichten epitaktische Schichten sind.

29. Anordnung von optischen Resonatoren nach einem der vorhergehenden Ansprüche, **dadurch gekennzeichnet,** daß mindestens ein optischer Wellenleiter oder Resonator aus einer in einem Schacht im Substrat angeordneten epitaktischen Schicht besteht.

30. Anordnung von optischen Resonatoren nach einem der vorhergehenden Ansprüche, **dadurch gekennzeichnet,** daß ein optischer Wellenleiter oder Resonator aus einem zwei Schächte im Substrat voneinander trennenden Steg besteht, wobei die Schächte ein Material enthalten, welches einen niedrigeren Brechungsindex als der Steg aufweist.

31. Anordnung von optischen Resonatoren nach einem der vorhergehenden Ansprüche, **dadurch gekennzeichnet,** daß eine epitaktische Schicht aus einer durch Molekularstrahlepitaxie erzeugten Schicht besteht.

32. Anordnung von optischen Resonatoren nach einem der vorhergehenden Ansprüche, **dadurch gekennzeichnet,** daß das Substrat eine Vertiefung (131) mit einer verspiegelten Endfläche aufweist, die eine verspiegelte Endfläche der matrixförmigen Anordnung von Resonatoren bildet.

33. Anordnung von optischen Resonatoren nach einem der vorhergehenden Ansprüche, **dadurch gekennzeichnet,** daß eine Randfläche des Substrats verspiegelt ist.

34. Anordnung von optischen Resonatoren nach einem der vorhergehenden Ansprüche, **dadurch gekennzeichnet,** daß zumindest ein thermo-elektrisches Element zur Veränderung der optischen Länge eines Resonators vorgesehen ist.

35. Anordnung von optischen Resonatoren nach einem der vorhergehenden Ansprüche, **dadurch gekennzeichnet,** daß das thermo-elektrische Element ein Peltier-Element ist.

36. Anordnung von optischen Resonatoren nach einem der vorhergehenden Ansprüche, **dadurch gekennzeichnet,** daß ein Piezoelement zur Änderung der optischen Länge eines Resonators vorgesehen ist.

37. Anordnung von optischen Resonatoren nach einem der vorhergehenden Ansprüche, **dadurch gekennzeichnet,** daß ein p-n-Übergang zur Regelung der effektiven Brechzahl eines Resonators durch Injizieren oder Absaugen von Ladungsträgern mittels Anlegen einer variablen elektrischen Spannung vorgesehen ist.

38. Anordnung von optischen Resonatoren nach einem der vorhergehenden Ansprüche, **dadurch gekennzeichnet,** daß an wenigstens einem Nutzresonator aus elektrooptischem Material Elektroden vorgesehen sind, an die eine Regelspannung zum Regeln des Brechungsindex und damit der Phasenkonstante dieses Nutzresonators mittels des elektrooptischen Effekts anlegbar ist.

39. Anordnung von optischen Resonatoren nach einem der vorhergehenden Ansprüche, **dadurch gekennzeichnet,** daß in die matrixförmige Anordnung von Resonatoren modulierte und unmodulierte Träger einstrahlbar sind.

40. Anordnung von optischen Resonatoren nach einem der vorhergehenden Ansprüche, **dadurch gekennzeichnet,** daß in die matrixförmige Anordnung von Resonatoren mittels eines Einkoppelwellenleiters (25) modulierte und unmodulierte Träger von zwei verschiedenen Seiten in die Koppelresonatoren einstrahlbar sind.

41. Anordnung von optischen Resonatoren nach einem der vorhergehenden Ansprüche, **dadurch gekennzeichnet,** daß wenigstens an einem der Nutzresonatoren Elektroden vorgesehen sind, an die eine Modulationsspannung anlegbar ist, mittels welcher durch den elektrooptischen Effekt der Brechungsindex und damit die Phasenkonstante dieses Nutzresonators im Takt der Modulationsspannung veränderbar ist.

42. Anordnung von optischen Resonatoren nach einem der vorhergehenden Ansprüche, **dadurch gekennzeichnet,** daß wenigstens ein Nutzresonator im Bereich eines p-n-Übergangs einer ihm zugeordneten Photodiode mit geringem Absorptionskoeffizientne befindet, mit welcher wellenlängeselektive Detektion der Strahlung vornehmbar ist.

43. Anordnung von optischen Resonatoren nach einem der vorhergehenden Ansprüche, **dadurch gekennzeichnet,** daß wenigstens ein Nutzresonator im Bereich ein p-n-Übergangs einer ihm zugeordneten Diode mit laserfähigem Material angeordnet ist, wodurch die getrennte verstärkung der jeweils eingestrahlten Wellenlängen vornehmbar ist.

44. Anordnung von optischen Resonatoren nach einem der vorhergehenden Ansprüche, **dadurch gekennzeichnet,** daß wenigstens ein Teil der elektrischen Ausgangssignale einer matrixförmigen Anordnung von Resonatoren mit Hilfe elektronisch gesteuerter Koppelpunkte auf eine beliebige Anzahl von Ausgangswellenleitern verteilt sind.

45. Anwendung einer Anordnung von optischen Resonatoren nach einem der vorhergehenden Ansprüche in einem Nachrichtenübertragungssystem.

46. Anwendung einer Anordnung von optischen Resonatgoren nach einem der Ansprüche 1 bis 44 in einem Vermittlungssystem.

**Claims**

1. Arrangement of optical resonators for the wavelength-selective splitting of a plurality of incoming combined channels of differing wavelength and/or combination of a plurality of incoming separated channels of differing wavelength, the resonators (22, 23, 221, 222, 231, 232) comprising dielectric waveguides which are integrated on a substrate, are optically coupled and are mirrored at mutually opposite ends with reflectors having high reflection factors close to the value of one, and the longitudinal extent of each resonator (22, 23, 221, 222, 231, 232) between the reflectors being large compared with the transverse extents of this resonator which are perpendicular thereto,

characterised in that
all optical resonators (22, 23, 221, 222, 231, 232) are integrated on the substrate in a matrix-type arrangement (20, 120, 220, 520, 620, 720) in such a manner that the resonators (22, 23, 221, 222, 232, 232) are oriented parallel to one another in the direction of their longitudinal extent and are optically coupled laterally in the direction perpendicular to their longitudinal extent,
in that the resonators (22, 23, 221, 222, 231, 232) exhibit coupling resonators (22, 221, 222), which are highly laterally coupled to one another, and useful resonators (23, 231, 232), between which an at most weak lateral coupling exists in comparison with the high lateral coupling of the coupling resonators (22, 221, 222),
in that, in comparison with the high lateral coupling of the coupling resonators (22, 221, 222), each useful resonator (23, 231, 232) is weakly laterally coupled to an associated coupling resonator (22, 221, 222),
in that an optical coupling-in waveguide (25, 27), which is oriented parallel to the coupling resonators (22, 221, 222) in its longitudinal extent and is highly coupled laterally, in a direction perpendicular to its longitudinal extent, to at least one coupling resonator (22, 221, 222), for coupling in the incoming combined channels, which are to be separated, into the matrix-type arrangement (20, 120, 220, 520, 620, 720) and/or a coupling-out waveguide (26, 27), which is oriented parallel to the coupling resonators (22, 221, 222) in its longitudinal extent and is highly coupled laterally, in a direction perpendicular to its longitudinal extent, to at least one coupling resonator (22, 221, 222), for coupling out the incoming, separated channels, which are to be combined, from the matrix-type arrangement (20, 120, 220, 520, 620, 720), is provided,
the high coupling between the coupling waveguides (22, 221, 222) and the high coupling of the coupling-in waveguide (25, 27) and/or of the coupling-out waveguide (26, 27) to at least one coupling waveguide (22, 221, 222) being selected so that all channels couple over between these waveguides and coupling resonators in their entire bandwidth, and
the weak coupling between the useful resonators (23, 231, 232) and between each useful resonator (23, 231, 232) and the coupling resonator (22, 221, 222) associated with the latter being selected to be low so that a resonance-type coupling over between this useful resonator (23, 231, 232) and the associated coupling resonator (22, 221, 222) takes place only at the wavelength of a channel unambiguously associated with this useful resonator (23, 231, 232), in the entire bandwidth of this one channel, this useful resonator (23, 231, 232) being set to an optical length between its reflectors at which the wavelength of the channel associated with this useful resonator (23, 231, 232) is a resonant wavelength of this useful resonator (23, 231, 232).

2. Arrangement of optical resonators according to Claim 1, characterised in that coupling resonators (22, 221, 222) are disposed in a plane and useful resonators (23, 231, 232) are disposed in a plane parallel to the plane of the coupling resonators (22, 221, 222).

3. Arrangement of optical resonators according to Claim 2, characterised in that useful resonators (23, 231, 232) are disposed in the plane of the coupling resonators (22, 221, 222) laterally beside these, highly coupled, coupling resonators (22, 221, 222).

4. Arrangement of optical resonators according to one of the preceding claims, characterised in that the channels can be coupled, via a single coupling-in and coupling-out waveguide (27), into the matrix-type arrangement (20, 120, 220, 520, 620, 720) and out of said matrix-type arrangement.

5. Arrangement of optical resonators according to one of the preceding claims, characterised in that the channels can be coupled in via a single coupling-in waveguide (25) and can be coupled out wavelength-selectively via a plurality of mutually at most weakly coupled coupling-out waveguides (26).

6. Arrangement of optical resonators according to one of the preceding claims, characterised in that the channels can be coupled in via a plurality of mutually at most weakly coupled coupling-in waveguides (25) and can be coupled out via a single coupling-out waveguide (26).

7. Arrangement of optical resonators according to one of the preceding claims, characterised in that a broadband optical coupler is integrated on the substrate, by means of which coupler an additional wavelength band can be coupled into a coupling-in waveguide (25).

8. Arrangement of optical resonators according to one of the preceding claims, characterised in that only coupling resonators (22, 221, 222) or only useful resonators (23, 231, 232) are disposed in one plane.

9. Arrangement of optical resonators according to one of the preceding claims, characterised in that the substrate comprises semiconductor material.

10. Arrangement of optical resonators according to one of the preceding claims, characterised in that the substrate is at least in part vitreous.

11. Arrangement of optical resonators according to one of Claims 1 to 8 and Claim 9, characterised in that an electronic circuit is integrated on the substrate of semiconductor material.

12. Arrangement of optical resonators according to one of the preceding claims, characterised in that a plurality of mutually spatially separate matrix-type arrangements of optical resonators are integrated on the substrate.

13. Arrangement of optical resonators according to one of the preceding claims, characterised in that at least one useful resonator (23, 231, 232) is situated in the region of a p-n junction, and in that switching means are provided, which permit the alteration of the properties of this useful resonator in the bonded system of the matrix-type arrangement (20, 120, 220, 520, 620, 720) of optical resonators (22, 23, 221, 222, 231, 232), electrically via the p-n junction.

14. Arrangement of optical resonators according to one of the preceding claims, characterised in that at least one useful resonator (23, 231, 232) comprises a material which exhibits no or only a low absorption.

15. Arrangement of optical resonators according to one of the preceding claims, characterised in that at least one useful resonator (23, 231, 232) comprises a material having an absorption as required for the effect of an absorption increase in a resonator.

16. Arrangement of optical resonators according to one of the preceding claims, characterised in that at least one useful resonator (23, 231, 232) comprises a laser-active material.

17. Arrangement of optical resonators according to one of the preceding claims, characterised in that at least a part of the substrate in the region of the matrix-type arrangement of resonators comprises a material which shows the electro-optical effect.

18. Arrangement of optical resonators according to one of the preceding claims, characterised in that the substrate comprises silicon and the material of optical waveguides and optical resonators comprises an $Si_xGe_{1-x}$ mixture with increased refractive index.

19. Arrangement of optical resonators according to one of the preceding claims, characterised in that connecting electrodes associated with useful resonators (23, 231, 232) are connected to one another in such a manner that electrical control signals for a plurality of resonators are present at a common electrode.

20. Arrangement of optical resonators according to one of the preceding claims, characterised in that the reflectors (28, 29) of the individual resonators (22, 23, 221, 222, 231, 232) are combined in each instance at one end of the resonators to form a common mirror.

21. Arrangement of optical resonators according to one of the preceding claims, characterised in that the resonators (22, 23, 221, 222, 231, 232) exhibit, at least at one end, mirrors which are separate from mirrors of other resonators.

22. Arrangement of optical resonators according to one of the preceding claims, characterised in that mutually opposite reflectors (28, 29) of the resonators exhibit two reflector surfaces which are disposed obliquely to one another.

23. Arrangement of optical resonators according to one of the preceding claims, characterised in that mutually opposite reflector surfaces of the reflectors (28, 29) of the resonators are parallel to one another.

24. Arrangement of optical resonators according to one of the preceding claims, characterised in that at least one resonator exhibits a different form of the refractive index behaviour in comparison with the other resonators in the direction of one of its transverse dimensions.

25. Arrangement of optical resonators according to one of the preceding claims, characterised in that optical waveguides and/or resonators are laterally bounded by surfaces (196) which are produced by etching of shafts into the substrate.

26. Arrangement of optical resonators according to one of the preceding claims, characterised in that optical waveguides and/or resonators are laterally bounded by surfaces (196) which are produced by anisotropic etching of shafts into the substrate.

27. Arrangement of optical resonators according to one of the preceding claims, characterised in that a reflector (28, 29) exhibits a plurality of optical layers having differing refraction properties.

28. Arrangement of optical resonators according to one of the preceding claims, characterised in that a plurality of optical layers having differing refraction properties are epitaxial layers.

29. Arrangement of optical resonators according to one of the preceding claims, characterised in that at least one optical waveguide or resonator comprises an epitaxial layer disposed in a shaft in the substrate.

30. Arrangement of optical resonators according to one of the preceding claims, characterised in that an optical waveguide or resonator comprises a web separating two shafts in the substrate from one another, the shafts including a material which exhibits a lower refractive index than the web.

31. Arrangement of optical resonators according to one of the preceding claims, characterised in that an epitaxial layer comprises a layer formed by molecular beam epitaxy.

32. Arrangement of optical resonators according to one of the preceding claims, characterised in that the substrate exhibits a depression (131) with a mirrored end surface which forms a mirrored end surface of the matrix-type arrangement of resonators.

33. Arrangement of optical resonators according to one of the preceding claims, characterised in that an edge surface of the substrate is mirrored.

34. Arrangement of optical resonators according to one of the preceding claims, characterised in that at least one thermocouple to alter the optical length of a resonator is provided.

35. Arrangement of optical resonators according to one of the preceding claims, characterised in that the thermocouple is a Peltier element.

36. Arrangement of optical resonators according to one of the preceding claims, characterised in that a piezoelectric element to alter the optical length of a resonator is provided.

**37.** Arrangement of optical resonators according to one of the preceding claims, characterised in that a p-n junction to regulate the effective refractive index of a resonator by injection or extraction of charge carriers by means of the application of a variable electric voltage is provided.

**38.** Arrangement of optical resonators according to one of the preceding claims, characterised in that at least one useful resonator of electro-optical material electrodes is provided, to which a regulating voltage to regulate the refractive index and thus the phase constant of this useful resonator by means of the electro-optical effect can be applied.

**39.** Arrangement of optical resonators according to one of the preceding claims, characterised in that modulated and unmodulated carriers can be injected into the matrix-type arrangement of resonators.

**40.** Arrangement of optical resonators according to one of the preceding claims, characterised in that, into the matrix-type arrangement of resonators, there can be injected by means of a coupling-in waveguide (25) modulated and unmodulated carriers from two different sides into the coupling resonators.

**41.** Arrangement of optical resonators according to one of the preceding claims, characterised in that, at least at one of the useful resonators, electrodes are provided, to which a modulating voltage can be applied, by means of which the refractive index and thus the phase constant of this useful resonator can be altered in synchronism with the modulating voltage by the electro-optical effect.

**42.** Arrangement of optical resonators according to one of the preceding claims, characterised in that at least one useful resonator is situated in the region of a p-n junction of a photodiode, associated with it, with low absorption coefficient, using which photodiode wavelength-selective detection of the radiation can be undertaken.

**43.** Arrangement of optical resonators according to one of the preceding claims, characterised in that at least one useful resonator is disposed in the region of a p-n junction of a diode, associated with it, with laser-active material, whereby separate amplification of the respectively injected wavelengths can be undertaken.

**44.** Arrangement of optical resonators according to one of the preceding claims, characterised in that at least a part of the electrical output signals of a matrix-type arrangement of resonators is distributed, by means of electronically controlled coupling points, to any selectable number of exit waveguides.

**45.** Application of an arrangement of optical resonators according to one of the preceding claims in a telecommunications system.

**46.** Application of an arrangement of optical resonators according to one of Claims 1 to 44 in an exchange system.

**Revendications**

**1.** Dispositif forme de résonateurs optiques pour la séparation, sélective du point de vue des longueurs d'onde, de plusieurs canaux arrivants réunis et possédant des longueurs d'ondes différentes et/ou pour la réunion de plusieurs canaux arrivants séparés et possédant des longueurs d'onde différentes, et dans lequel

les résonateurs (22,23,221,222,231,232) sont constitués par des guides d'ondes diélectriques intégrés sur un substrat et couplés optiquement et qui sont métallisés sur des extrémités réciproquement opposées comportant des réflecteurs présentant un facteur élevé de réflexion proche de la valeur un, et

l'extension longitudinale de chaque résonateur (22,23,221,222, 231,232) entre les réflecteurs est grande par rapport aux extensions transversales, perpendiculaires à cette extension longitudinale, de ce résonateur,

caractérisé par le fait

que tous les résonateurs optiques (22,23,221,222,231,232) sont intégrés sur le substrat selon un dispositif matriciel (20,120,220,520,620,720) de telle sorte que les résonateurs (22,23,221,222,231,232) sont orientés parallèlement les uns aux autres dans la direction de leur extension longitudinale et sont couplés optiquement latéralement dans une direction perpendiculaire à leur extension longitudinale,

que les résonateurs (22,23,221,222,231,232) possèdent des résonateurs de couplage (22,221,222), qui sont couplés entre eux latéralement selon un couplage fort, et des résonateurs utiles (23,231,232), entre lesquels il existe, au plus, un couplage latéral lâche comparativement au couplage latéral fort des résonateurs de couplage (22,221,222),

que chaque résonateur utile (23,231,232) est couplé latéralement à un résonateur de couplage associé (22,221,222) selon un couplage lâche par rapport au couplage latéral fort des résonateurs de couplage (22,221,222),

qu'un guide d'ondes optiques d'injection, dont l'extension longitudinale est orientée parallèlement aux résonateurs de couplage (22,221,222) et qui est couplé latéralement, selon un couplage fort, dans une direction perpendiculaire à son extension longitudinale, à au moins un résonateur de couplage (22,221,222) et sert à injecter les canaux arrivants réunis et devant être séparés, dans le dispositif de forme matricielle (20,120,220,520,620,720) et/ou un guide d'ondes de couplage (26,27), dont l'extension longitudinale est alignée parallèlement aux résonateurs de couplage (22,221,222) et qui est couplé latéralement selon un couplage fort, dans une direction perpendiculaire à son extension longitudinale, à au moins un résonateur de couplage (22,221,222) et qui sert à découpler les canaux arrivants séparés et devant être réunis hors du dispositif de forme matricielle (20,220,520,620, 720),

et dans lequel le couplage fort entre les guides d'ondes de couplage (22,221,222) et le couplage fort du guide d'ondes d'injection (25,27) et/ou du guide d'ondes de découplage (26,27) à au moins un guide d'ondes de couplage (22,221,222) est choisi de manière qu'entre ces guides d'ondes et ces résonateurs de couplage, il existe un surcouplage de tous les canaux sur la totalité de leur largeur de bande, et

dans lequel dans lequel on choisit le couplage lâche entre les résonateurs utiles (23,231,232) et entre chaque résonateur utile (23,231,232) et le résonateur de couplage (22,221,222) associé à ce résonateur, de manière qu'il soit faible afin d'obtenir un surcouplage, conforme à la résonance, entre ce résonateur utile (23,231,232) et le résonateur de couplage associé (22,221,222), uniquement pour la longueur d'onde d'un canal, associé de façon nette à ce résonateur utile (23,231,232), dans l'ensemble de la largeur de bande de ce canal, la longueur optique entre les réflecteurs de ce résonateur utile (23,231,232) étant réglée sur une valeur pour laquelle la longueur d'onde du canal associé à ce résonateur utile (23,231,232) est une longueur d'onde de résonance de ce résonateur utile (23,231,232).

2. Dispositif formé de résonateurs optiques suivant la revendication 1, caractérisé par le fait que des résonateurs de couplage (22,221,222) sont disposés dans un plan et que des résonateurs utiles (23,231,232) sont disposés dans un plan parallèle au plan des résonateurs de couplage (22,221,222).

3. Dispositif formé de résonateurs optiques suivant la revendication 2, caractérisé par le fait que des résonateurs utiles (23,231,232) sont disposés dans le plan des résonateurs de couplage (22,221,222), latéralement à côté de ces résonateurs de couplage (22,221,222) réunis selon un couplage fort.

4. Dispositif formé de résonateurs optiques suivant l'une des revendications précédentes, caractérisé par le fait que les canaux peuvent être injectés dans le dispositif matriciel (20,120,220,520,620,720) ou en être découplés, par l'intermédiaire d'un seul guide d'ondes d'injection et de couplage (27).

5. Dispositif formé de résonateurs optiques suivant l'une de revendications précédentes, caractérisé par le fait que l'injection des canaux peut être effectuée par l'intermédiaire d'un seul guide d'ondes d'injection (25) et elle peut être découplée par l'intermédiaire de plusieurs guides d'ondes de découplage (26) couplés entre eux selon un couplage aussi lâche que possible, et d'une manière sélective du point de vue des longueurs d'onde.

6. Dispositif formé de résonateurs optiques suivant l'une des revendications précédentes, caractérisé par le fait que l'injection des canaux peut être effectuée par l'intermédiaire de plusieurs guides d'ondes d'injection (25) couplés entre eux selon un couplage aussi lâche que possible, et elle peut être découplée par l'intermédiaire d'un seul guide d'ondes de découplage (26).

7. Dispositif formé de résonateurs optiques suivant l'une des revendications précédentes, caractérisé par le fait que sur le substrat est intégré un coupleur optique à large bande, à l'aide duquel une bande supplémentaire de longueurs d'onde peut être injectée dans un guide d'ondes d'injection (25).

8. Dispositif formé de résonateurs optiques suivant l'une des revendications précédentes, caractérisé par le fait que seuls des résonateurs de couplage (22,221,222) ou seuls des résonateurs utiles (23,231,232) sont disposés dans un plan.

9. Dispositif formé de résonateurs optiques suivant l'une des revendications précédentes, caractérisé par le fait que le substrat est formé d'un matériau semiconducteur.

10. Dispositif formé de résonateurs optiques suivant l'une des revendications précédentes, caractérisé par le fait que le substrat est au moins en partie vitreux.

11. Dispositif formé de résonateurs optiques suivant l'une des revendications 1 à 8 et 9, caractérisé par le fait qu'un circuit électronique est intégré sur le substrat formé d'un matériau semiconducteur.

12. Dispositif formé de résonateurs optiques suivant l'une des revendications précédentes, caractérisé par le fait que plusieurs dispositifs matriciels, séparés les uns des autres dans l'espace et formés par des résonateurs optiques, sont intégrés sur le substrat.

13. Dispositif formé de résonateurs optiques suivant l'une des revendications précédentes, caractérisé par le fait qu'au moins un résonateur utile (23,231,232) est disposé au niveau d'une jonction p-n, et qu'il est prévu des moyens en forme de circuit qui permettent, par l'intermédiaire de la jonction p-n, de modifier électriquement les caractéristiques de ce résonateur utile, dans l'assemblage formé par le dispositif matriciel (20,120,220,520,620,720) de résonateurs optiques (22,23,221, 22,231,232).

14. Dispositif formé de résonateurs optiques suivant l'une des revendications précédentes, caractérisé par le fait qu'au moins un résonateur utile (23,231,232) est réalisé en un matériau, qui ne présente aucune absorption ou présente seulement une faible absorption.

15. Dispositif formé de résonateurs optiques suivant l'une des revendications précédentes, caractérisé par le fait qu'au moins un résonateur utile (23,231,232) est réalisé en un matériau produisant une absorption qui est nécessaire pour obtenir l'effet d'accroissement d'absorption dans un résonateur.

16. Dispositif formé de résonateurs optiques suivant l'une des revendications précédentes, caractérisé par le fait qu'au moins un résonateur utile (23,231,232) est réalisé en un matériau apte à produire l'effet laser.

17. Dispositif formé de résonateurs optiques suivant l'une des revendications précédentes, caractérisé par le fait qu'au moins une partie du substrat est formée, au niveau du dispositif matriciel de résonateurs, par un matériau qui présente l'effet électro-optique.

18. Dispositif formé de résonateurs optiques suivant l'une des revendications précédentes, caractérisé par le fait que le substrat est formé par du silicium et que le matériau des guides d'ondes optiques et des résonateurs optiques est formé d'un mélange $Si_xGe_{1-x}$ possédant un indice de réfraction élevé.

19. Dispositif formé de résonateurs optiques suivant l'une des revendications précédentes, caractérisé par le fait que des électrodes de raccordement associées à des résonateurs utiles (23,231,232) sont réunies entre elles de telle sorte que les signaux électriques de commande pour plusieurs résonateurs sont appliqués à une électrode commune.

20. Dispositif formé de résonateurs optiques suivant l'une des revendications précédentes, caractérisé par le fait que les réflecteurs (28,29) des différents résonateurs (22,23,221,222,231,232) sont réunis, respectivement à une extrémité des résonateurs, pour former un miroir commun.

21. Dispositif formé de résonateurs optiques suivant l'une des revendications précédentes, caractérisé par le fait que les résonateurs (22,23,221,222,231,232) possèdent, au moins à une extrémité, des miroirs qui sont séparés des miroirs d'autres résonateurs.

22. Dispositif formé de résonateurs optiques suivant l'une des revendications précédentes, caractérisé par le fait que des réflecteurs (28,29), situés à l'opposé l'un de l'autre, des résonateurs possèdent deux surfaces réfléchissantes disposées obliquement l'une par rapport à l'autre.

23. Dispositif formé de résonateurs optiques suivant l'une des revendications précédentes, caractérisé par le fait que des surfaces, situées à l'opposé l'une de l'autre, des réflecteurs (28,29) des résonateurs sont parallèles.

24. Dispositif formé de résonateurs optiques suivant l'une des revendications précédentes, caractérisé par le fait que l'allure de l'indice de réfraction d'au moins un résonateur possède, dans la direction de l'une de ses dimensions transversales une autre forme que celle des autres résonateurs.

25. Dispositif formé de résonateurs optiques suivant l'une des revendications précédentes, caractérisé par le fait que les guides d'ondes optiques et/ou les résonateurs sont limités latéralement par des surfaces (196) qui sont formées au moyen de l'aménagement de puits par corrosion dans le substrat.

26. Dispositif formé de résonateurs optiques suivant l'une des revendications précédentes, caractérisé par le fait que des guides d'optiques et/ou des résonateurs sont limités latéralement par des surfaces (196) qui sont formées par l'aménagement, dans le substrat, de puits obtenus par corrosion anisotrope.

27. Dispositif formé de résonateurs optiques suivant l'une des revendications précédentes, caractérisé par le fait qu'un réflecteur (28,29) possède plusieurs couches optiques ayant des indices de réfraction différents.

28. Dispositif formé de résonateurs optiques suivant l'une des revendications précédentes, caractérisé par le fait que plusieurs couches optiques possédant des indices de réfraction différents, sont des couches épitaxiales.

29. Dispositif formé de résonateurs optiques suivant l'une des revendications précédentes, caractérisé par le fait qu'au moins un guide d'ondes optiques ou un résonateur est constitué par une couche épitaxiale disposée dans un puits ménagé dans le substrat.

30. Dispositif formé de résonateurs optiques suivant l'une des revendications précédentes, caractérisé par le fait qu'un guide d'ondes optiques ou un résonateur est constitué par une barrette qui sépare l'un de l'autre deux puits ménagés dans le substrat, les puits contenant un matériau qui possède un indice de réfraction inférieur à celui de la barrette.

31. Dispositif formé de résonateurs optiques suivant l'une des revendications précédentes, caractérisé par le fait qu'une couche épitaxiale est constituée par une couche produite par une épitaxie à faisceau moléculaire.

32. Dispositif formé de résonateurs optiques suivant l'une des revendications précédentes, caractérisé par le fait que le substrat possède un renfoncement (131) comportant une surface d'extrémité métallisée, qui forme une surface d'extrémité métallisée du dispositif matriciel de résonateurs.

33. Dispositif formé de résonateurs optiques suivant l'une des revendications précédentes, caractérisé par le fait qu'une surface marginale du substrat est métallisée.

34. Dispositif formé de résonateurs optiques suivant l'une des revendications précédentes, caractérisé par le fait qu'au moins un élément thermoélectrique est prévu pour modifier la longueur optique d'un résonateur.

35. Dispositif formé de résonateurs optiqués suivant l'une des revendications précédentes, caractérisé par le fait que l'élément thermoélectrique est un élément Peltier.

36. Dispositif formé de résonateurs optiques suivant l'une des revendications précédentes, caractérisé par le fait qu'il est prévu un élément piézoélectrique pour modifier la longueur optique d'un résonateur.

37. Dispositif formé de résonateurs optiques suivant l'une des revendications précédentes, caractérisé par le fait qu'il est prévu une jonction p-n pour régler l'indice de réfraction effectif d'un résonateur au moyen d'une injection ou d'une aspiration de porteurs de charges moyennant l'application d'une tension électrique variable.

38. Dispositif formé de résonateurs optiques suivant l'une des revendications précédentes, caractérisé par le fait que sur au moins un résonateur utile formé d'un matériau électro-optique, il est prévu des électrodes, auxquelles peut être appliquée une tension de réglage servant à régler l'indice de réfraction et, par conséquent, la constante de phase de ce résonateur utile au moyen de l'effet électro-optique.

39. Dispositif formé de résonateurs optiques suivant l'une des revendications précédentes, caractérisé par le fait que des porteuses modulées et non modulées peuvent être injectées dans le dispositif matriciel de résonateurs.

40. Dispositif formé de résonateurs optiques suivant l'une des revendications précédentes, caractérisé par le fait que des porteuses modulées et non modulées peuvent être injectées dans le dispositif matriciel de résonateurs à l'aide d'un guide d'ondes d'injection (25), sur deux côtés différents dans les résonateurs de couplage.

41. Dispositif formé de résonateurs optiques suivant l'une des revendications précédentes, caractérisé par le fait qu'au moins sur l'un des résonateurs utiles il est prévu des électrodes, auxquelles peut être appliquée une tension de modulation à l'aide de laquelle l'indice de réfraction et, par conséquent, la constante de phase de ce résonateur utile peuvent être modifiés à la cadence de la tension du modulateur, sur la base de l'effet électro-optique.

42. Dispositif formé de résonateurs optiques suivant l'une des revendications précédentes, caractérisé par le fait qu'au moins un résonateur utile est situé dans la zone d'une jonction p-n d'une photodiode qui lui est associée et qui possède un faible coefficient d'absorption et à l'aide de laquelle on peut réaliser une détection du rayonnement, sélective du point de vue des longueurs d'onde.

43. Dispositif formé de résonateurs optiques suivant l'une des revendications précédentes, caractérisé par le fait qu'au moins un résonateur utile est disposé dans la zone d'une jonction p-n d'une diode qui lui est associée et qui est réalisée en un matériau apte à produire l'effet laser, ce qui permet d'obtenir l'amplification séparée des longueurs d'onde respectivement injectées.

44. Dispositif formé de résonateurs optiques suivant l'une des revendications précédentes, caractérisé par le fait qu'au moins une partie des signaux électriques de sortie d'un dispositif matriciel de résonateurs sont répartis, à l'aide de points de couplage commandés électroniquement, entre un nombre quelconque de guides d'ondes de sortie.

45. Utilisation d'un dispositif formé de résonateurs optiques suivant l'une des revendications précédentes dans un système de transmission d'informations.

46. Utilisation d'un dispositif formé de résonateurs optiques suivant l'une des revendications 1 à 44 dans un système de commutation.

FIG 1

FIG 2

FIG 3

FIG 4

FIG 5

FIG 6

FIG 7

FIG 8a

FIG 8b

FIG 9

## FIG 10

## FIG 11

**FIG 12**

Träger

22  22  29  22

25  23

91  23  28

**FIG 13**

23  23

23

25  28  22

33

91  Träger

**FIG 14**

T

22  22  29  22

220

27  23

23

91  23  28

R  $I_E$

FIG 15

FIG 16

FIG 17

FIG 18

FIG 19

520

22        28

231    25    231

232        232

21

FIG 20

620

22        28

231    25    231

232        232

26        26

21

FIG 21

720

25    221        28

231        231

232        232

26        222

21

FIG 22

82 = elektronische Vermittlung

16

Demodulator/ Empfänger

21

83

FIG 23

161

162

163

164  165

FIG 24

T auf 27

27  221

820

23  23

21

26  222  28

FIG 25

16,27  16,27  16,27  16,27

820  820  820  820

16,26  16,26

1.Teilnehmer  2.Teilnehmer  3.Teilnehmer  4.Teilnehmer

EP 0 193 852 B1

FIG 26

92

21

FIG 27

95

92

21

FIG 28

196

96

196

21

92    92    92

196

FIG 32

p    n    p    n

FIG 33

93    p

n,92

FIG 29

97,99

97,99

98

92

FIG 30

93

101

97

97

92

FIG 31

103

93

φ

γ

δ

τ

102

92

# FIG 34

## FIG 35

## FIG 36

## FIG 37

FIG 38

FIG 39

FIG 40

FIG 41

FIG 42